# EUROPÄISCHE PATENTANMELDUNG

(11) **EP 2 687 543 A1**
(43) Veröffentlichungstag der Anmeldung: **22.01.2014**
(21) Anmeldenummer: 12177353.5
(22) Anmeldetag: 20.07.2012
(51) Int. Cl.: C08B 31/00, C08B 31/10, C08B 31/12, C08H 1/00, C08L 3/04, C08L 89/00, C08H 99/00, C04B 24/14, C04B 24/38

(54) **Hydrogel aus einem chemisch modifizierten Polysaccharid-Protein-Blend, Verfahren zur Herstellung eines PPB-Hydrogels und Verwendungen hiervon**

(71) Anmelder: Fraunhofer-Gesellschaft zur Förderung der angewandten Forschung e.V., 80686 München (DE); Institut für Lebensmittel- und Umweltforschung e.V., 14558 Nuthetal- OT Bergholz-Rehbrücke (DE); Construction Research & Technology GmbH, 83308 Trostberg (DE)
(72) Erfinder: Vorweg, Waltraud, Dr., 14469 Potsdam (DE); Radosta, Sylvia, Dr., 14558 Nuthetal (DE); Lehrack, Uwe, Dipl.-Ing., 14471 Potsdam (DE); Knapen, Robin, 14467 Potsdam (DE); Einfeldt, Lars, 07743 Jena (DE); Schuhbeck, Mandfred, 83278 Traunstein (DE)
(74) Vertreter: Pfenning, Meinig & Partner GbR

(57) **Zusammenfassung**

Erfindungsgemäß wird ein Hydrogel enthaltend chemisch modifizierte Polysaccharide und Proteine bereitgestellt. Es wird darüberhinaus ein Verfahren bereitgestellt, um aus Gemischen von Polysacchariden und Proteinen ein Hydrogel herzustellen. Erfindungsgemäß werden durch das Verfahren die Polysaccharide und Proteine chemisch kovalent modifiziert und intermolekular chemisch vernetzt. Der erfindungsgemäß hergestellte, chemisch derivatisierte Polysaccharid-Protein-Blend (abgekürzt "PPB") ist dadurch gekennzeichnet, dass er in wässrigem Medium ein Hydrogel ausbildet. Das erfindungsgemäße PPB-Hydrogel ist charakterisiert durch ein hohes Wasserbindungspotential und eine hohe Klebewirkung. Beispielsweise in der Bauchemie wirkt sich das erfindungsgemäße PPB-Hydrogel vorteilhaft auf das Klebe- und Abrutschverhalten von Fliesen aus.

## Beschreibung

Erfindungsgemäß wird ein Hydrogel enthaltend chemisch modifizierte Polysaccharide und Proteine bereitgestellt. Es wird darüberhinaus ein Verfahren bereitgestellt, um aus Gemischen von Polysacchariden und Proteinen ein Hydrogel herzustellen. Erfindungsgemäß werden durch das Verfahren die Polysaccharide und Proteine chemisch kovalent modifiziert und intermolekular chemisch vernetzt. Der erfindungsgemäß hergestellte, chemisch derivatisierte Polysaccharid-Protein-Blend (abgekürzt "PPB") ist dadurch gekennzeichnet, dass er in wässrigem Medium ein Hydrogel ausbildet. Das erfindungsgemäße PPB-Hydrogel ist charakterisiert durch ein hohes Wasserbindungspotential und eine hohe Klebewirkung. Beispielsweise in der Bauchemie wirkt sich das erfindungsgemäße PPB-Hydrogel vorteilhaft auf das Klebe- und Abrutschverhalten von Fliesen aus.

In Baustoffsystemen für Trockenmörtelanwendungen ist für eine optimale Verarbeitung die Zugabe von polymeren Additiven unerlässlich. Die typischen Trockenmörtelanwendungen umfassen im Wesentlichen zementäre und gipsgebundene Putzsysteme, Klebe- und Armierungsmörtel für Wärmedämmverbundsysteme, Fliesenkleber und Fugenmörtel, sowie Spachtelmassen.

Ein Trockenmörtel, der als Fliesenkleber verwendet werden soll, stellt hohe Anforderungen an die Formulierungskomponenten in diesem mineralischen Bindemittelsystem, die sich im Standvermögen (Abrutschverhalten), der Benetzungsfähigkeit (Klebe-Offene Zeit) der Fliesen sowie den Versteifungszeiten des Fliesenklebers ausdrücken.

Ein Fugenmörtel findet dagegen Anwendung beim Ausfugen der Abstände von verlegten Fliesen. Hier sind geringe Eigenviskositäten (fließfähige Konsistenz) und kurze Versteifungszeiten des Fugenmörtels bzw. der Fugenmörtelsuspension von Vorteil. Dadurch können die Fliesen schon nach wenigen Minuten, wenn der Erhärtungsvorgang des Mörtels in vollem Gange ist, feucht abgewischt werden.

Einerseits werden in Wärmedämmverbundsystemen (WDVS) Klebemörtel verwendet, mit denen das Dämmmaterial (z.B. extrudiertes Polystyrol) auf einen mineralischen Untergrund (z.B. Gebäudewände aus Ziegel und/oder Beton) befestigt wird. Andererseits benötigt man einen Armierungsmörtel für die sogenannte Armierungsschicht zwischen Dämmmaterial und einem Ober- bzw. Dekoputz.

Die Kriterien an einen Klebemörtel für ein WDVS sind vergleichbar mit denen eines Fliesenklebers: Ein gutes Standvermögen, eine lange Klebe-Offene Zeit, jedoch kurze Versteifungszeiten. Ein schnelles Versteifen des Klebers nach Anbringen der Dämmplatten ist notwendig, um die weiteren Verarbeitungsschritte (Armierung) nicht zu verzögern.

Zum Erreichen der Mindestanforderungen an den verschiedenen Trockenmörtel und der damit verbundenen Verbesserung der Eigenschaften und Verarbeitungsbedingungen werden den Mörtelformulierungen gewöhnlich polymere Additive zugesetzt, deren Wirkung auf unterschiedliche Ursachen zurückzuführen sind.

Die polymeren Bestandteile in (Trocken-)Mörtelformulierungen aus dem Stand der Technik lassen sich unterteilen in wasserunlösliche Dispersionspulver und wasserlösliche bzw. wasserquellbare Polysaccharidether (siehe z.B. Simonides, H., ZKG International 61, (2008) S. 48-51).

Typische Dispersionspulver sind beispielsweise Vinylacetat-EthylenCopolymere oder Styrol-Acrylat-Copolymere, die als organisches Bindemittel fungieren und deren Eigenschaften und Funktion man wie folgt umschreiben kann: Sie redispergieren nach Zugabe von Wasser und es kommt mit zunehmender Hydratation des mineralischen Bindemittels zu einer Verdichtung bzw. Agglomeration der Partikel des Dispersionspulvers. Die Folge ist die Bildung eines polymeren Films zwischen den mineralischen Partikeln. Insofern sind diese Dispersionspulver als organisches Bindemittel zu betrachten, wodurch wesentliche Mörteleigenschaften, wie z.B. Klebfestigkeit, Verformbarkeit, Zähigkeit, Abrasionsresistenz und Wasserundurchlässigkeit, verbessert werden.

Zu den wasserlöslichen bzw. wasserquellbaren Polysaccharidethern, die essentieller Bestandteil von Formulierungen aus dem Stand der Technik sind, gehören zwei unterschiedliche Substanzklassen: Zum einen die Celluloseether und zum anderen die Stärkeether.

Während die Celluloseether im Wesentlichen als Wasserrückhaltemittel und Verdickungsmittel, also als rheologisches Stellmittel, fungieren, besitzen die Stärkeether in Fliesenkfeberformulierungen dagegen die Aufgabe, die rheologischen Eigenschaften des Mörtels, also der gesamten hydraulischen erhärtenden Formulierung, zu beeinflussen.

Die Celluloseether bauen die entsprechende Viskosität im feuchten Mörtel auf, erzeugen eine gewisse Klebrigkeit des Mörtels, und sind vor allem für die Wasserrückhaltung verantwortlich. Sie beeinflussen maßgeblich den W/Z-Wert in der Formulierung.

Die durch die Zugabe von Stärkeether verursachte Änderung der Rheologie schlägt sich dagegen im Fliesenkleber darin nieder, dass ein Abrutschen der Fliesen (Standvermögen) verhindert wird, die Klebe-Offene-Zeit verlängert wird (d.h. die Benetzbarkeitsdauer der Fliesen mit dem Klebemörtel erhöht wird) und die Verarbeitbarkeit des Mörtels insgesamt (z.B. Versteifungszeiten) verbessert wird.

Für den Zusatz von Stärkeether als Polymeradditiv in Fliesenkleberformulierungen sind keine Stoffe im Stand der Technik bekannt, welche das Eigenschaftsprofil von Stärkeether durch alternative Rohmaterialien substituieren bzw. verbessern könnten (siehe WO 2009/065159 A1).

Die US 3,943,000 beschreibt ein Verfahren zur Behandlung säuremodifizierter PPB und reinen Stärken mittels Alkyloxiden, insbesondere Ethylenoxid. In diesem Verfahren werden säuremodifizierte Polysaccharide und Proteine als Ausgangssubstanz für die Vernetzung verwendet, welche durch die Säureeinwirkung einen starken Abbau der Polysaccharide und/oder Proteine durch teilweise Hydrolyse der glykosidischen Bindung und/oder Peptidbindung erfahren haben. Es können folglich keine vernetzten Polysaccharide und Proteine mit hohem Molekulargewicht bereitgestellt werden.

Zudem erfolgt die Herstellung der in der US 3,943,000 verwendeten, säuremodifizierten Polysaccharide und Proteine nicht über ein nasschemisches Slurry-Verfahren, sondern über ein trockenchemisches Verfahren (siehe US 3,073,724 und US 3,692,581). Ohne vorheriges Quellen der Polysaccharide in einem wässrigen Slurry werden die Polysaccharide nur an der Oberfläche von Überstrukturen der Polysaccharide (z.B. kristalline Zustände, Aggregate, Agglomerate, Cluster, Körner) modifiziert. Als Folge kann keine homogene Derivatisierung entlang der Kette der Polysaccharide erfolgen und durch eine anschließende intermolekularen Vernetzung keine vernetzten Polysaccharide und Proteine, welche in wässrigem Medium ein Hydrogel ausbilden, erhalten werden.

In der DE 102 30 777 A1 wird die trocken-thermische Umsetzung Hydroxylgruppen-haltiger Rohstoffe mit Polyepoxiden zur Erreichung einer Vernetzung der Moleküle beschrieben. Als Rohstoffe werden hier insbesondere Mehle genannt, deren Gesamtbiomasse funktionalisiert wird. Aus dem trockenen Verfahren ergibt sich der oben genannte Nachteil, dass die Polysaccharide aufgrund der Bildung von Überstrukturen im Mehl nur an der Oberfläche der Überstrukturen chemisch modifiziert werden. Somit findet keine homogene Modifikation entlang der gesamten Polysaccharid-Kettenlänge statt. Dies wird vor allem dadurch deutlich, dass in der trocken-thermischen Umsetzung die Stärkekornform erhalten bleibt d.h. keine Destrukturierung der Polysaccharid-Überstruktur erfolgt. Folglich werden durch dieses Verfahren chemisch modifizierte Polysaccharide und Proteine erhalten, welche unfähig sind nach einer Vernetzung ein Hydrogel auszubilden.

Die Aufgabe der vorliegenden Erfindung ist somit die Bereitstellung eines PPB, welcher in wässrigem Medium ein Hydrogel ausbildet, und ein Verfahren zur Herstellung eines PPB-Hydrogels.

Die erfindungsgemäße Aufgabe wird gelöst durch die PPB gemäß Anspruch 1 und 18, die Mörtelformulierung gemäß Anspruch 19, das nasschemische Verfahren zur Herstellung von PPB gemäß Anspruch 10 und die Verwendungen gemäß Anspruch 20. Die abhängigen Ansprüche zeigen vorteilhafte Weiterbildungen auf.

Ein Aspekt der Erfindung ist es, Polysaccharide und Proteine als Ausgangsmaterial für die Herstellung von verbesserten Polymeradditiven zu verwenden. Der vorliegenden Erfindung liegt daher eine alternative Substanzklasse als Rohstoff zu Grunde, dessen Eigenschaften sich nach einer entsprechenden Derivatisierung gegenüber den aus dem Stand der Technik bekannten Stärkeethern entscheidend verbessern.

Polysaccharide bzw. Proteine zeichnen sich strukturell dadurch aus, dass sie zumindest teilweise wasserquellbar und/oder partiell wasserlöslich sind d.h. es kann sowohl das Polysaccharid (Homo- als auch Heteropolysaccharid) als auch das Protein wasserquellbar und/oder partiell wasserlöslich sein. Beispielsweise zeichnen sich eine Vielzahl natürlich vorkommender Gemische, welche Polysaccharide und Proteine enthalten, durch diese Eigenschaft aus. Erfindungsgemäß wird ein PPB enthaltend partiell wasserquellbare Polysaccharide und Proteine bereitgestellt, wobei die Polysaccharide und Proteine jeweils zumindest partiell chemisch kovalent modifiziert sind durch
a) mindestens eine nicht-vernetzende Derivatisierung; und
b) mindestens eine vernetzende Derivatisierung,
wobei die Polysaccharide und Proteine zumindest partiell chemisch kovalent miteinander vernetzt sind. Der erfindungsgemäße PPB ist dadurch gekennzeichnet, dass er in wässrigem Medium ein Hydrogel ausbildet.

Das Wort Gel leitet sich von dem Begriff Gelatine (lat. Gelatum: Gefrorenes) ab. In der Kolloidchemie versteht man darunter ein formbeständiges, deformierbares, an Flüssigkeiten reiches disperses System aus mindestens zwei Komponenten, die zumeist aus einem festen, kolloidal verteiltem Stoff und einer Flüssigkeit als Dispersionsmittel bestehen (Elias, H,-G., Makromoleküle, Band 2, Wiley-VCH, 2001, S.354-356; Tanaka, T., Scientific American, 224 (1981), 110-123; Nagy, M., Coll. Polym. Sci., 263 (1985), 245-265).

Das dreidimensionale Netzwerk eines Geles bildet sich durch Vernetzungen zwischen den einzelnen Polymerketten. Diese Netzpunkte sind entweder chemischer (kovalenter) oder physikalischer Natur. Physikalische Wechselwirkungen können ionischer (Coulomb), nicht-ionischer (Wasserstoffbrücken) oder micellarer Natur (Van-der-Waals-Kräfte) sein. Wenn das Dispersionsmittel aus Wasser besteht, so spricht man von Hydrogelen. Sie basieren auf hydrophilen, aber wasserunlöslichen Polymeren. In Wasser quellen diese Polymere bis zu einem Gleichgewichtsvolumen unter Formerhaltung auf (Candau, S., Bastide, J., Delsanti, M., Adv. Polym. Sci., 44 (1982), 27-71; Daoud, M., Bouchaud, E., Jannink, G.,Macromolecules, 19 (1986) 1955).

Ob ein Gel vorliegt kann mittels dynamischer Rheologie bestimmt werden, in dem der Speichermodul G' und Verlustmodul G" in Abhängigkeit von der Frequenz bestimmt werden. Aufgrund des Verlaufs dieser Kennwerte kann eine Aussage über die vorhandene Struktur, viskoelastische Lösung oder Gel, getroffen werden. Nach der Definition eines Gels ist der Speichermodul G' oberhalb des Verlustmoduls G" und ist nahezu unabhängig von der Meßfrequenz in mindestenz einer Dekade (siehe Burchard, W., Ross-Murphy, S.B., Elsevier Science Publishers LTD, 1990, ISBN 1-85166-413-0).

Erfindungsgemäß wird durch die nicht-vernetzende Derivatisierung der partiell wasserquellbaren Polysaccharide und Proteine erreicht, dass eine Destrukturierung von Überstrukturen stattfindet. Beispielsweise wird durch die Destrukturierung eine Rekristallisation der ursprünglich partiell wasserquellbaren Polysaccharide unterdrückt. Zum einen ergibt sich dadurch eine erhöhte Quellbarkeit und Löslichkeit der derivatisierten Polysaccharide, welche sich in der Fähigkeit zur Kaltwasserquellbarkeit manifestieren kann. Zum anderen wird durch das Aufbrechen der Überstrukturen eine homogene Derivatisierung entlang der Polysaccharidkette möglich, welche die Fähigkeit zur Hydrogelbildung von partiell wasserquellbaren Polysacchariden begründet, wenn eine entsprechende Vernetzung zwischen Glucanketten der Polysaccharide bzw. zwischen Polysaccharid und Protein vorliegt.

Voraussetzung für die Fähigkeit zur Hydrogelbildung der erfindungsgemäßen PPB ist somit, dass die in dem PPB enthaltenen partiell wasserquellbaren Polysaccharide, bevorzugt homogen, entlang ihrer Kette chemisch kovalent derivatisiert sind.

Die nicht-vernetzende Derivatisierung von Proteinen kann außerdem eine irreversible Denaturierung der Proteine bewirken. Denaturierte Proteine nehmen eine "random coil"-Struktur ein, welche eine Derivatisierung des Proteins entlang der Polypeptidkette ermöglicht d.h. eine Derivatisierung an Stellen, welche im nativen Proteinzustand nicht zugänglich sind. Dadurch ergibt sich die Möglichkeit, die Löslichkeitseigenschaften der Proteine gezielt zu beeinflussen.

Durch eine vernetzende Derivatisierung der Polysaccharide und Proteine wird deren Hydrogelcharakter erzeugt, der sich in einer plastischen Viskosität niederschlägt. Je höher der Unterschied zwischen Speichermodul (G') und Verlustmodul (G") ist, desto markanter sind die Hydrogeleigenschaften des Vernetzungsproduktes und damit seine Verwendbarkeit als Ersatz für Stärkeether in Trockenmörtelformulierungen gegeben.

Der Begriff Viskoelastizität geht von der klassischen Theorie der Elastizität aus, die mechanische Eigenschaften eines perfekt elastischen Festkörpers beschreibt. In Abhängigkeit von der Struktur eines Festkörpers, einer Schmelze, eines Geles oder einer Dispersion gibt es Abweichungen vom rein elastischen Verhalten; viskose und elastische Anteile liegen nebeneinander vor. Diese Eigenschaften werden als viskoelastisch bezeichnet (J. M. G. Cowie "Polymer Chemistry & Physics of Modern Mateials" 2nd Edition, Blackie; Glasgow and London, 1991; P. C. Hiemenz "Polymer Chemistry, The Basic Concepts" Marcel Dekker, Inc., New York and Basel, 1984).

Ein wesentlicher Vorteil des erfindungsgemäßen PPB gegenüber herkömmlichen Stärkeethern ist, dass er als Additive in bauchemischen Formulierungen bei vergleichbaren Werten von Klebe-Offener-Zeit, Standvermögen und Verarbeitbarkeit, eine gegenüber Stärkeethern geringere Abbindeverzögerung aufweist.

Der erfindungsgemäß hergestellte PPB weist zudem über den gesamten pH-Bereich von 1-14 die Eigenschaft auf Wasser zu binden und/oder zu immobilisieren.

In einer bevorzugten Ausgestaltungsform der Erfindung enthält der erfindungsgemäße PPB, bezogen auf wasserfreien PPB,
a) 20-99 Gew.-%, bevorzugt 55-96 Gew.-%, besonders bevorzugt 70-85 Gew.-% Polysaccharide; und/oder
b) 1-80 Gew.-%, bevorzugt 4-45 Gew.-%, besonders bevorzugt 5-15 Gew.-%, Proteine.

Ein Gehalt an Polysaccharid und/oder Protein in diesem Bereich hat sich als besonders vorteilhaft im Hinblick auf die Hydrogelbildung, Klebeeigenschaften und Produktionskosten des PPB herausgestellt.

In einer bevorzugten Ausgestaltungsform der Erfindung weisen die löslichen Polysaccharide in dem erfindungsgemäßen PPB eine mittlere Molmasse von 10⁶ bis 10⁷ g/mol auf. Diese Angabe bezieht sich auf die molare Masse eines durchschnittlichen Polysaccharids im PPB, welche nicht durch die chemisch kovalente Derivatisierung hervorgerufen ist, sondern allein in der Masse des Polysaccharids ohne chemische Derivatisierung begründet ist. Voteilhaft ist hierbei, dass der PPB im Wesentlichen die natürliche Vernetzung der Polysaccharid-Monomere über eine glykosidische Bindung aufweist. Es wurde gefunden, dass sich eine mittlere molare Masse der Polysaccharide im Bereich 10⁶ bis 10⁷ g/mol vorteilhaft auf die Hydrogel-Bildung des PPB auswirkt.

Die partiell wasserquellbaren Polysaccharide und Proteine können pflanzliche oder tierische Proteine und/oder Polysaccharide enthalten oder im Wesentlichen daraus bestehen. In dieser Hinsicht bevorzugt sind Polysaccharide und/oder Proteine aus Getreide, Pseudogetreide, pflanzlichen Knollen, pflanzlichen Rhizomen und/oder Leguminosenfrüchten. Bevorzugte Getreide sind Weizen, Dinkel, Roggen, Hafer, Gerste, Hirse, Triticale, Mais und Reis. Bevorzugte Pseudogetreide sind Buchweizen, Amaranth, Quinoa und Hanf. Bevorzugte pflanzliche Knollen sind Kartoffel, Süßkartoffel (Batate) und Maniok (Tapioca). Bevorzugte pflanzliche Rhizomen sind Wasserbrotwurzel (Taro) und Pfeilwurz (Arrow Root) und bevorzugte Leguminosen sind Bohnen, Erbsen, Linsen und Esskastanie. Weiterhin kann pflanzliches Mark verwendet werden, bevorzugt Mark der Sagopalme. Besonders bevorzugt sind Polysaccharide und/oder Proteine aus Roggen.

Insbesondere können die partiell wasserquellbaren Polysaccharide und Proteine in der Form eines Mehls vorliegen.

Der Vorteil an Polysacchariden und/oder Proteinen aus einer pflanzlichen Quelle ist, dass nachwachsende Rohstoffe als Rohprodukt bzw. Edukt für die Herstellung des erfindungsgemäßen PPB verwendet werden können. Dies stellt einem enormen ökonomischen und ökologischen Vorteil gegenüber Polysacchariden und/oder Proteinen aus anderen Quellen dar.

Die Polysaccharide und Proteine des erfindungsgemäßen PPB können mindestens eine Derivatisierung, aber auch mehrere Derivatisierungen aufweisen, bevorzugt ausgewählt aus der Gruppe bestehend aus neutralen, hydrophoben und kationischen Substituenten.

In einer bevorzugten Ausgestaltungsform weisen die Polysaccharide und Proteine im PPB eine Hydroxyalkylierung auf, bevorzugt eine Hydroxyalkylierung durch ein Hydroxylierungsmittel ausgewählt aus der Gruppe der Oxirane, besonders bevorzugt ausgewählt aus der Gruppe bestehend aus Alkylenoxiden mit geradkettigen oder verzweigten C₁-C₁₈ Alkylgruppen, insbesondere Ethylenoxid und/oder Propylenoxid.

Des Weiteren kann der erfindungsgemäße PPB eine Funktionalisierung mit chemischen Verbindungen aus der Gruppe bestehend aus quaternären Ammoniumsalzen und organischen Chlorverbindungen, bevorzugt 3-Chloro-2-hydroxypropyltrimethylammoniumchlorid und/oder 3-Chloro-2-hydroxypropyl-alkyl-dimethylammoniumchlorid, aufweisen. Besonders bevorzugt ist eine Funktionalisierung mit Trialkylammoniumethylchlorid und/oder Trialkylammoniumglycid. Die Alkylgruppe kann jeweils gleich oder verschieden sein und/oder mindestens eine geradkettige oder verzweigte C₁-C₁₈ Alkylgruppen enthalten oder daraus bestehen.

Die Polysaccharide und Proteine in dem erfindungsgemäßen PPB können mit einer Menge von 0,001-2,0 mol, bevorzugt 0,01-0,5 mol, besonders bevorzugt 0,1-0,4 mol, nicht-vernetztendem Derivatisierungsreagenz pro mol Anhydroglukoseeinheit der Polysaccharide modifiziert sein.

In dieser Hinsicht können die Polysaccharide und/oder Proteine des PPB in Bezug auf die nicht-vernetzende Derivatisierung, einen Substitutionsgrad (DS) von 0,001-1,0, bevorzugt 0,01-0,5, besonders bevorzugt 0,1-0,4, aufweisen.

Bevorzugt sind die Polysaccharide und Proteine dergestalt nicht-vernetzend substituiert, dass die Polysaccharide nach der Derivatisierung keine kompakte Struktur ausbilden können und/oder die Proteine in denaturierter Form vorliegen. In dieser Hinsicht ist vor allem ein Substitutionsgrad ≥ 0,1 in Bezug auf die Polysaccharide vorteilhaft, um die Rekristallisation der modifizierten Polysaccharide zu verhindern.

Hinsichtlich der chemisch kovalenten Vernetzung können die Polysaccharide und Proteine in dem PPB mit einer Menge von 0,001-1,0 mol, bevorzugt 0,01-0,5 mol, besonders bevorzugt 0,05-0,2 mol, vernetzendem Derivatisierungsreagenz pro mol Anhydroglucoseeinheit der Polysaccharide modifiziert sein. In dieser Hinsicht ist ein Vernetzungsgrad ≥ 0,05 mol vernetztendem Derivatisierungsreagenz pro mol Anhydroglukoseeinheit der Polysaccharide besonders vorteilhaft für eine höhere Klebewirkung des PPB.

Bevorzugt sind die Polysaccharide und Proteine in dem erfindungsgemäßen PPB über ein Derivatisierungsreagenz ausgewählt aus der Gruppe bestehend aus
a) Epihalohydrin, Diglycidethern und (Poly)alkylenglykoldiglycidylethern, bevorzugt Polyalkylenglykoldiglycidylether mit 1-100 Ethylenglycoleinheiten;
b) Phosphorsäure und Phosphorsäurederivate, bevorzugt Phosphorsäureanhydride, Phosphorsäurechloride und/oder Phosporsäureester;
c) Bi- oder oligofunktionelle organische Alkyl- und Arylverbindungen, bevorzugt Carbonsäuren und/oder Carbonsäureester;
d) Aldehyde, bevorzugt Formaldehyd, Glutaraldehyd und/oder Glyoxal;
e) Pfropfungsagenzien, bevorzugt Acrylsäure-Verbindungen, substituierte Acrylate, Vinylgruppen-haltige Verbindungen und/oder Aldehyd-Amid-Kondensate; und
f) Halide, bevorzugt Epoxihalide, aliphatische Dihalide, halogeniertes Polyethylenglycol und/oder Diglycoldichlorid,
vernetzt.

In dem erfindungsgemäßen PPB kann nur ein Teil der Proteine und Polysaccharide zumindest bereichsweise chemisch kovalent vernetzt sein. Bevorzugt ist diese Vernetzung über Hydroxyl-, Amino- und/oder Sulfhydrylgruppen auf den Proteinen und/oder Polysacchariden realisiert. In dieser Hinsicht kann zumindest ein Teil der Proteine und/oder Polysaccharide zumindest bereichsweise ausschließlich über funktionelle Gruppen chemisch kovalent vernetzt sein, welche aufgrund der nicht-vernetztenden Derivatisierung auf den Polysacchariden und/oder Proteinen vorhanden sind bzw. eingeführt wurden.

Erfindungsgemäß kann der PPB im alkalischem Milieu einen löslichen Anteil von 0-30 % aufweisen.

Darüberhinaus wird ein nasschemisches Verfahren zur Herstellung des erfindungsgemäßen PPB in Form eines Hydrogels bereitgestellt, umfassend die Verfahrensschritte
a) Suspendieren von mindestens einem partiell wasserquellbarem Polysaccharid und mindestens einem Protein in einem wässrigen Medium, wobei ein Slurry enthaltend zumindest partiell gequollenes Polysaccharid und Protein entsteht;
b) Partielle, chemisch kovalente Derivatisierung von zumindest einem Teil der Polysaccharide und Proteine durch mindestens ein nicht-vernetzendes Derivatisierungsreagenz; und
c) Partielle, chemisch kovalente Derivatisierung von zumindest einem Teil der Polysaccharide und Proteine durch mindestens ein vernetzendes Derivatisierungsreagenz;
wobei die Schritte a) bis c) gleichzeitig oder nacheinander erfolgen können und in Schritt c) dergestalt vernetzt wird, dass aus dem mindestens einen Polysaccharid und mindestens einem Protein ein Hydrogel entsteht.

Durch die Derivatisierung mit mindestens einem nicht-vernetzenden Derivatisierungsreagenz kann die intermolekulare Rekristallisation von Polysaccharid-Glucanketten unterdrückt und somit eine ideale Solvatation von Polysaccharid-Glucanketten erzeugt werden. Entscheidend an diesem Schritt ist, dass ein Slurry enthaltend zumindest partiell gequollenes Polysaccharid entsteht. Durch das Aufquellen des partiell wasserquellbaren Polysaccharids wird sichergestellt, dass das nicht-vernetzende Derivatisierungsreagenz die Überstruktur des Polysaccharids aufbrechen kann und somit das Polysaccharid homogen entlang der Kette derivatisiert werden kann. Durch eine homogene Derivatisierung entlang der Kette der Polysaccharide wird eine Rekristallisation (Überstrukturbildung) der Polysaccharide verhindert.

Die Derivatisierung der Polysaccharide kann hierbei beispielsweise an den freien Hydroxylgruppen der Zuckermoleküle erfolgen.

Zumindest partiell können in diesem Schritt auch Proteine derivatisiert werden. An den Proteinen kann die Derivatisierung beispielsweise an lösungsmittelexponierten Hydroxylgruppen (z.B. Ser, Thr), Aminogruppen (z.B. Lysin) und/oder Sulfhydrylgruppen (z.B. Cys) stattfinden.

In dem zweiten Schritt des erfindungsgemäßen Verfahrens erfolgt die Zugabe von mindestens einem vernetztenden Derivatisierungsreagenz, wodurch zumindest ein Teil der Polysaccharide und Proteine zumindest bereichsweise miteinander vernetzt wird. Die Vernetzung kann hierbei über funktionelle Gruppen der Polysaccharide (z.B. Hydroxylgruppen) und über funktionelle Gruppen der Proteine (z.B. Hydroxylgruppen, Aminogruppen und/oder Sulfhydrylgruppen) erfolgen.

In Schritt b) des erfindungsgemäßen Verfahrens kann die chemisch kovalente nicht-vernetzende Derivatisierung bei saurem, neutralen oder basischen pH durchgeführt werden. In Schritt c) kann die chemisch kovalente vernetzende Derivatisierung bei alkalischen pH durchgeführt werden. Zur Einstellung des pH können Hydroxide der Alkalimetalle (z.B. NaOH oder KOH) und/oder Oxide bzw. Hydroxide mehrwertiger Kationen (z.B. CaO) verwendet werden. Hierbei kann auf eine nachträgliche Neutralisation dieser basischen Salze verzichtet werden.

In einer bevorzugten Ausführungsform des Verfahrens wird in Schritt a) Wasser zugeführt, bis zu einer Menge von mindestens 40 Gew.-%, bevorzugt 60-90 Gew.-%, besonders bevorzugt 75-85 Gew.-%, Wasser, in Bezug auf die Gesamtmasse des Slurry.

Bevorzugt wird das Verfahren bei einer Temperatur von 20-90 °C, bevorzugt 30-60 °C, besonders bevorzugt 30-40 °C, durchgeführt.

Das mindestens eine partiell wasserquellbare Polysaccharid und/oder das mindestens eine Protein kann ein pflanzliches oder tierisches Polysaccharid und/oder Protein enthalten oder daraus bestehen. Bevorzugt sind Polysaccharide und/oder Proteine aus Getreide, Pseudogetreide, pflanzlichen Knollen, pflanzlichen Rhizomen und/oder Leguminosenfrüchten. Bevorzugte Getreide sind Weizen, Dinkel, Roggen, Hafer, Gerste, Hirse, Triticale, Mais und Reis. Bevorzugte Pseudogetreide sind Buchweizen, Amaranth, Quinoa und Hanf. Bevorzugte pflanzliche Knollen sind Kartoffel, Süßkartoffel (Batate) und Maniok (Tapioca). Bevorzugte pflanzliche Rhizomen sind Wasserbrotwurzel (Taro) und Pfeilwurz (Arrow Root) und bevorzugte Leguminosen sind Bohnen, Erbsen, Linsen und Esskastanie. Weiterhin kann pflanzliches Mark verwendet werden, bevorzugt Mark der Sagopalme. Besonders bevorzugt sind Polysaccharide und/oder Proteine aus Roggen.

Insbesondere kann das mindestens eine partiell wasserquellbare Polysaccharid und mindestens eine Protein in Form eines Mehls vorliegen.

Da in Schritt b) des erfindungsgemäßen Verfahrens verwendete, nicht-vernetzende Derivatisierungsreagenz kann ausgewählt sein aus der Gruppe bestehend aus neutralen, hydrophoben und kationischen nicht-vernetzenden Derivatisierungsreagenzien.

Bevorzugt ist das nicht-vernetzendes Derivatisierungsreagenz ein Hydroxyalkylierungsreagenz. Das Hydroxyalkylierung ist bevorzugt ausgewählt aus der Gruppe der Oxirane, besonders bevorzugt ausgewählt aus der Gruppe bestehend aus Alkylenoxiden mit geradkettigen oder verzweigten C₁-C₁₈ Alkylgruppen, insbesondere Ethylenoxid und/oder Propylenoxid.

Das Reagenz kann ferner mindestens eine kationische Gruppe, bevorzugt mindestens eine tertiäre oder quartäre Ammoniumgruppe, aufweisen.

Insbesondere ist das Kationisierungsreagenz eine chemische Verbindung aus der Gruppe der quaternären Ammoniumsalze und organischen Chlorverbindungen wie z.B. 3-Chloro-2-hydroxypropyltrimethylammoniumchlorid und/oder 3-Chloro-2-hydroxypropyl-alkyl-dimethylammoniumchlorid.

In dem Verfahrensschritt b) des erfindungsgemäßen Verfahrens ist es bevorzugt, dass das mindestens eine Polysaccharid und Protein mit einer Menge von 0,001-2,0 mol, bevorzugt 0,01-0,5 mol, besonders bevorzugt 0,1-0,4 mol, nicht-vernetztendes Derivatisierungsreagenz pro mol Anhydroglukoseeinheit des mindestens einen Polysaccharids modifiziert werden.

In dem Verfahrensschritt Schritt c) kann zumindest ein Teil des mindestens einen Proteins und Polysaccharids durch das zumindest eine vernetzende Derivatisierungsreagenz zumindest bereichsweise chemisch kovalent vernetzt werden, bevorzugt über Hydroxyl-, Amino- und/oder Sulfhydrylgruppen auf dem mindestens einen Protein und/oder Polysaccharid. Diese funktionellen Gruppen können natürlicher Bestandteil des Polysaccharids und/oder Proteins sein und/oder können durch Schritt b) des Verfahrens eingeführt worden sein.

Optional erfolgt die Vernetzung ausschließlich über in Schritt b) eingeführte funktionelle Gruppen. Prinzipiell kann die chemische kovalente Vernetzung somit über funktionelle Gruppen stattfinden, welche das mindestens eine Polysaccharid und Protein vor und/oder nach der Derivatisierung in Schritt b) des erfindungsgemäßen Verfahrens aufweisen. Die Art und Weise der Vernetzung kann hierbei über die Wahl des vernetztenden Derivatisierungsreagenz in Schritt c) gesteuert werden.

In einer bevorzugten Ausführungsform des Verfahrens ist das in Schritt c) verwendete vernetzende Derivatisierungsreagenz ausgewählt ist aus der Gruppe bestehend aus
a) Epihalohydrin, Diglycidethern und (Poly)alkylenglylcoldiglycidylethern, bevorzugt Polyalkylenglykoldiglycidylether mit 1-100 Ethylenglycoleinheiten;
b) Phosphorsäure und Phosphorsäurederivate, bevorzugt Phosphorsäureanhydride, Phosphorsäurechloride und/oder Phosporsäureester;
c) Bi- oder oligofunktionelle organische Alkyl- und Arylverbindungen, bevorzugt Carbonsäuren und/oder Carbonsäureester;
d) Aldehyde, bevorzugt Formaldehyd, Glutaraldehyd und/oder Glyoxal;
e) Pfropfungsagenzien, bevorzugt Acrylsäure-Verbindungen, substituierte Acrylate, Vinylgruppen-haltige Verbindungen und/oder Aldehyd-Amid-Kondensate; und
f) Halide, bevorzugt Epoxihalide, aliphatische Dihalide, halogeniertes Polyethylenglycol und/oder Diglycoldichlorid.

In dem Verfahrensschritt c) des erfindungsgemäßen Verfahrens kann das mindestens eine Polysaccharid und Protein mit einer Menge von 0,001-1,0 mol, bevorzugt 0,01-0,5 mol, besonders bevorzugt 0,05-0,2 mol, vernetztendes Derivatisierungsreagenz pro mol Anhydroglucoseeinheit des mindestens einen Polysaccharids modifiziert werden.

In einer weiteren bevorzugten Ausführungsform des erfindungsgemäßen Verfahrens wird in einem Schritt d) der Slurry fraktioniert, bevorzugt über Zentrifugation des Slurry, besonders bevorzugt über Zentrifugation des Slurry mit > 10.000 g. Somit kann das aus dem mindestens einen Polysaccharid und mindestens einem Protein enstandene PPB in Form eines Hydrogels angereichert werden und ein reineres PPB-Hydrogel bereitgestellt werden. Insbesondere makromolekulare Verunreinigungen, welche nicht chemisch kovalent mit dem PPB-Hydrogel verbunden sind, können somit abgereichert werden.

Es wird ferner ein PPB bereitgestellt, welcher nach dem erfindungsgemäßen Verfahren herstellbar ist. Die Polysaccharide des erfindungsgemäßen PPB weisen eine (homogene) chemische Derivatisierung entlang der PolysaccharidKette auf, welche vernetzte Polysaccharide und Proteine aus dem Stand der Technik aufgrund der Verwendung von trockenchemischen Verfahren bzw. der Zugabe von Quellungsinhibitoren im Slurry-Verfahren nicht aufweisen. Dadurch ergibt sich für den erfindungsgemäß hergestellten PPB ein deutlicher chemischer Unterschied zu den vernetzten Polysacchariden und Proteinen aus dem Stand der Technik. Der erfindungsgemäße PPB ist ferner durch die Eigenschaft charakterisiert, dass er in wässrigem Medium ein Hydrogel ausbildet.

Erfindungsgemäß werden auch Mörtelformulierungen vorgeschlagen, welche den erfindungsgemäßen PPB enthalten.

Der erfindungsgemäße PPB kann vor allem in der Bauchemie verwendet werden, bevorzugt als Zusatz für eine Formulierung in der Bauchemie, besonders bevorzugt als Zusatz für eine hydraulisch erhärtende Formulierung in der Bauchemie.

Darüberhinaus findet der erfindungsgemäße PPB Verwendung in einer Klebstoffformulierung und/oder Verfugungsformulierung, bevorzugt in einer Mörtelformulierung, besonders bevorzugt in einer Trockenmörtelformulierung.

Die Formulierung in der Bauchemie bzw. die Klebstoffformulierung und/oder Verfugungsformulierung kann den erfindungsgemäßen PPB in einem Anteil von 0,01 bis 0,2 Gew.-%, bevorzugt 0,02 bis 0,15 Gew.-%, besonders bevorzugt 0,03 bis 0,10 Gew.-%, enthalten.

Verglichen mit Polymeradditiven aus dem Stand der Technik weisen Formulierungen mit dem erfindungsgemäßen PPB - sogar bei niedrigeren Konzentrationen - ein verbessertes Standvermögen (Abrutschverhalten) und Abbindeverhalten, sowie eine erhöhte mechanische Stabilität auf. Desweiteren reduziert sich die auftretende Versteifungsverzögerung deutlich, wobei gleichzeitig eine Verlängerung der Klebe-Offenen Zeit beobachtet wird. Erstaunlicherweise werden weitere wichtige Mörteleigenschaften nicht negativ beeinträchtigt.

Ebenfalls in Betracht kommt eine Verwendung des erfindungsgemäßen PPB als Bindemittel und/oder Klebstoff, bevorzugt zum Kleben, Armieren, Verfugen und/oder Verspachteln von Fliesen, insbesondere zum Kleben, Armieren, Verfugen und/oder Verspachteln von Fliesen für Wärmedämmverbundsysteme.

Für Fliesenkleberformulierungen gilt allgemein, dass Polymeradditive von Vorteil sind, welche rheologisch ein Hydrogel-Verhalten aufweisen. Hydrogele sind in Fliesenkleberformulierungen deshalb vorteilhaft, da das Standvermögen von Fliesen durch ein Additiv in Form eines Hydrogels weiter verbessert wird. Da der erfindungsgemäße PPB in wässrigem Medium als Hydrogel vorliegt, ist er hervorragend als Polymeradditiv in Fliesenkleberformulierungen geeignet.

Anhand der nachfolgenden Figuren und Beispiele soll der erfindungsgemäße Gegenstand näher erläutert werden, ohne diesen auf die hier dargestellten spezifischen Ausführungsformen einschränken zu wollen.
Fig. 1: Fließverhalten und Frequenzsweep für ein erfindungsgemäßes PPB-Hydrogel.
Fig. 2: Fließverhalten und Frequenzsweep für ein erfindungsgemäßes PPB-Hydrogel, welches über ein Fraktionierverfahren aufgereinigt wurde.
Fig. 3: Fließverhalten und Frequenzsweep für ein erfindungsgemäßes PPB-Hydrogel im Vergleich zu einem Stärkeether aus dem Stand der Technik.
Fig. 4: Verzögerungszeit bis zur Versteifung einerFliesenkleberformulierung, welche verschiedene Additive enthält.
Fig. 5: Verzögerungszeit bis zur Versteifung eines Klebe- und Armierungsmörtels eines WDV-Systems, welcher verschiedene Additive enthält.

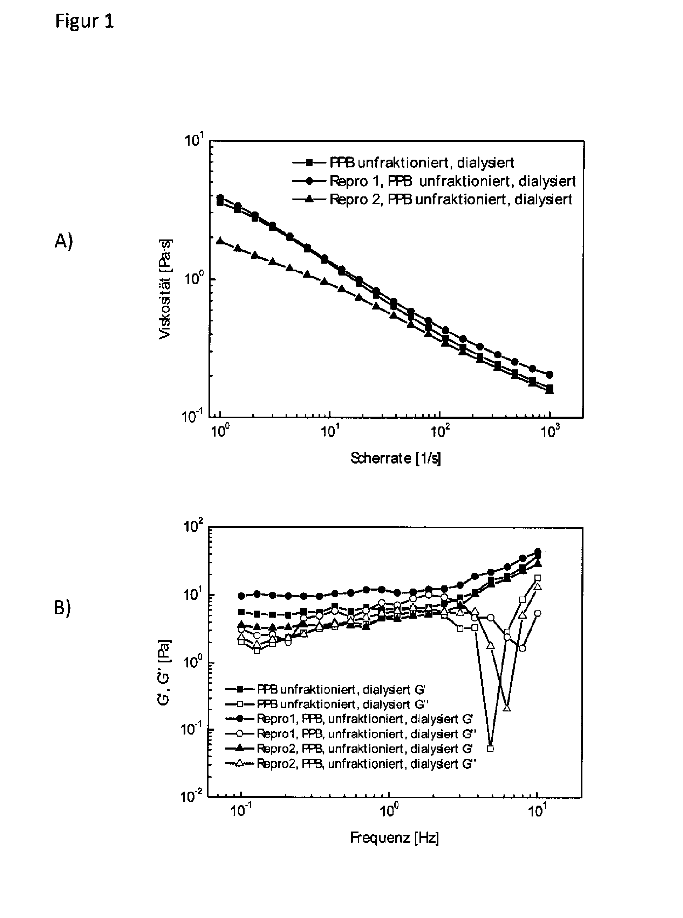

Figur 1 zeigt das Fließverhalten (Fig. 1A) und den Frequenzsweep (Fig. 1B) für ein erfindungsgemäßes PPB-Hydrogel (Herstellung siehe Beispiel 1). Als Ausgangssubstanz für die Herstellung des PPB wurde Roggenmehl verwendet. Die Bezeichnung "unfraktioniert" in den Figuren 1A und 1B bedeutet, dass es sich bei dem PPB-Hydrogel um das Rohprodukt aus dem erfindungsgemäßen Verfahren handelt. Die Bezeichnung "Repro" in den Figuren 1A und 1B steht für unterschiedliche Chargen an PPB-Hydrogelen, welche durch Reproduktion des erfindungsgemäßen Herstellungsverfahrens entstanden sind. Deckungsgleichheit der Kurven spricht für ein hohes Maß an Reproduzierbarkeit hinsichtlich des Fließverhaltens, des Speichermoduls G' und des Verlustmoduls G".

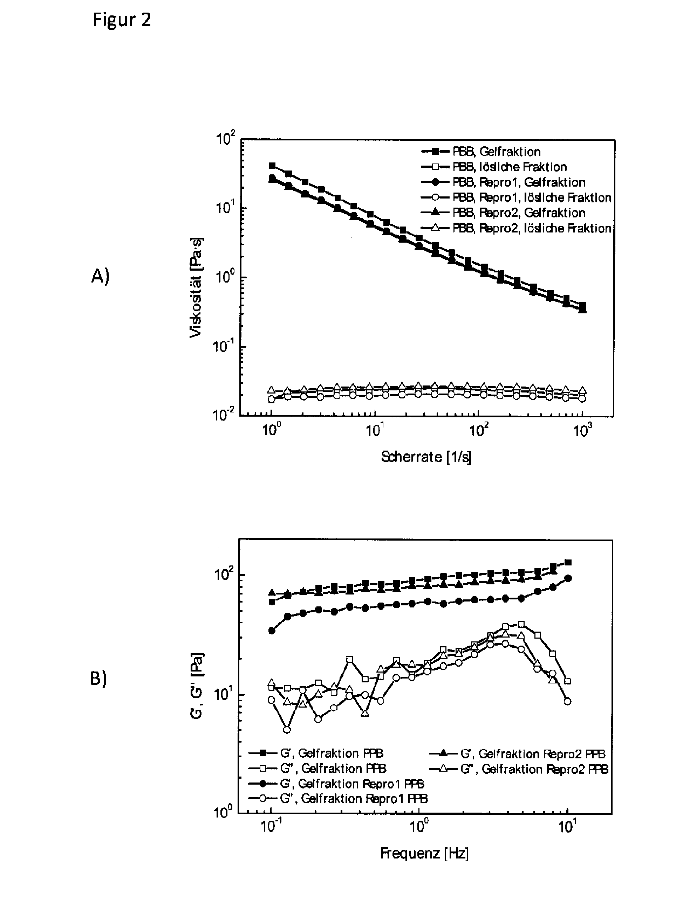

Figur 2 zeigt das Fließverhalten (Fig. 1A) und den Frequenzsweep (Fig. 1B) für ein erfindungsgemäßes PPB-Hydrogel, welches über ein Fraktionierverfahren (siehe Beispiel 1) aufgereinigt wurde. Als Ausgangssubstanz für die Herstellung des PPB wurde Roggenmehl verwendet. Die Bezeichnung "Gelfraktion" in den Figuren 2A und 2B bedeutet, dass es sich um aufgereinigtes PPB-Hydrogel handelt. Die Bezeichnung "lösliche Fraktion" steht für die "Abfallfraktion" des Aufreinigungsverfahrens (= Überstand nach Zentrifugation in Beispiel 1). Die Bezeichnung "Repro" in den Figuren 2A und 2B steht für unterschiedliche Chargen an PPB-Hydrogelen, welche durch Reproduktion des erfindungsgemäßen Herstellungsverfahrens entstanden sind. Deckungsgleichheit der Kurven spricht für ein hohes Maß an Reproduzierbarkeit hinsichtlich des Fließverhaltens, des Speichermoduls G' und des Verlustmoduls G". Die Eigenschaften Fließverhalten, Speichermodul G' und Verlustmodul G" des erfindungsgemäßen PPB-Hydrogels konnten durch Aufreinigung weiter verbessert werden. Dadurch wird die eigenschaftserforderliche Rolle und Bedeutung des Hydrogelcharakters der PPB besonders ersichtlich.

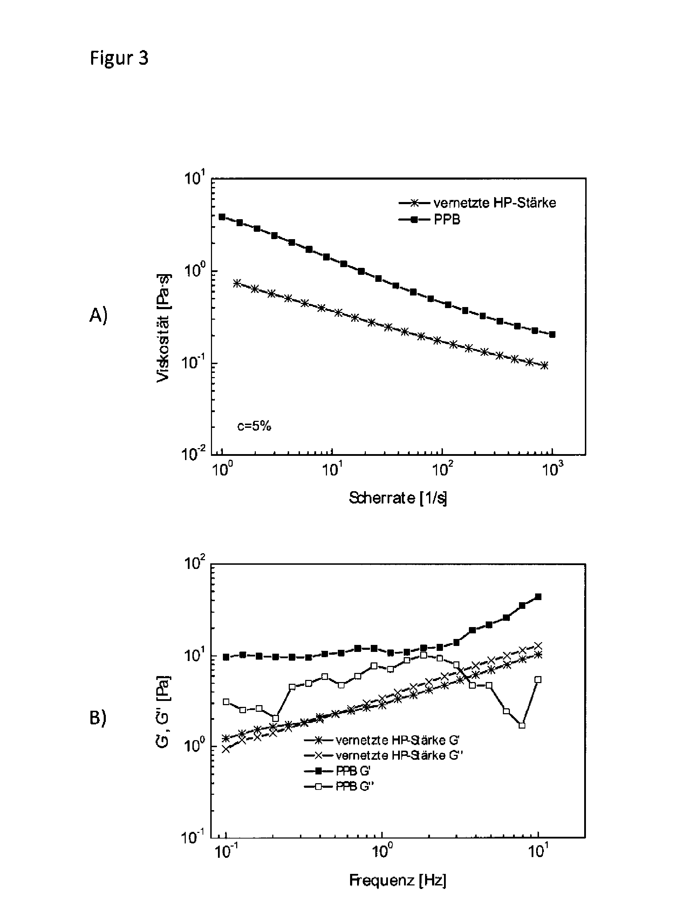

Figur 3 zeigt das Fließverhalten und Frequenzsweep für ein erfindungsgemäßes PPB-Hydrogel im Vergleich zu einem Stärkeether aus dem Stand der Technik. In Bezug auf das Fließverhalten (Figur 3A) ist ersichtlich, dass die Viskosität des erfindungsgemäßen PPB in dem untersuchten Scherratenbereich signifikant höher ist als die Viskosität des Stärkeethers aus dem Stand der Technik. In Bezug auf den Frequenz-Sweep (Figur 3B) geht für den Stärkeether aus dem Stand der Technik deutlich hervor, dass Speicher (G') - und Verlust (G") Modul nahezu gleich groß sind und in Abhängigkeit von der Frequenz ansteigen. Es handelt sich hierbei um das typische Verhalten einer viskoelastischen Lösung. Im Vergleich hierzu weist das erfindungsgemäße PPB-Hydrogel signifikant höhere Werte für G' und G", signifikant höhere Werte für G' in einem breiten Frequenzbereich und nahezu keine Frequenzabhängigkeit zwischen 0,1 und 1 Hz auf. Das erfindungsgemäße PPB-Hydrogel zeigt das typische Verhalten eines Hydrogels.

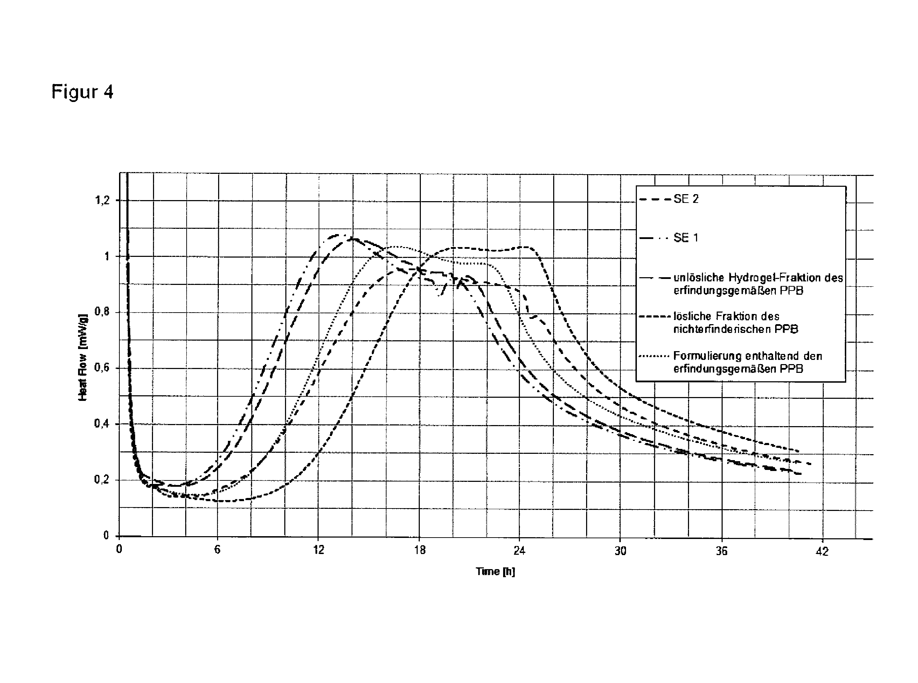

Figur 4 zeigt graphisch die Verzögerungszeit bis zur Versteifung einer Fliesenkleberformulierung, welche erfindungsgemäßen PPB, die unlösliche Hydrogel-Fraktion des erfindungsgemäßen PPB, die nicht-erfindungsgemäße, lösliche Fraktion des erfindungsgemäßen PPB oder herkömmliche Stärkeether (SE1 oder SE2), enthält. Im Wärmekalorimeter erkennt man, dass nur die unlösliche Hydrogel-Fraktion des erfindungsgemäßen PPB ähnlich gut ist wie SE 1. Sowohl zu Beginn der Beschleunigungsphase (nach ca. 4 h), als auch beim Maximum des Wärmeflusses ist das Niveau der beiden Produkte gleich. Die Abweichung von einer Stunde kann hier vernachlässigt werden. Die Formulierung enthaltend die erfindungsgemäßen PPB oder SE 2 verzögert um 2 bis 3 Stunden. Das Endniveau der Beschleunigungsphase ist niedriger im Vergleich zur unlöslichen Hydrogel-Fraktion des erfindungsgemäßen PPB oder SE 1. Bei der löslichen Fraktion des nicht-erfinderischen, löslichen Anteils des erfindungsgemäßen PPB tritt eine Verzögerung von 5-6 Stunden (beim Maximum des Wärmeflusses) im Vergleich zu den besten Produkten auf. Dieser Unterschied ist schon zu groß und für die Praxis (Baustelle) nicht mehr akzeptabel.

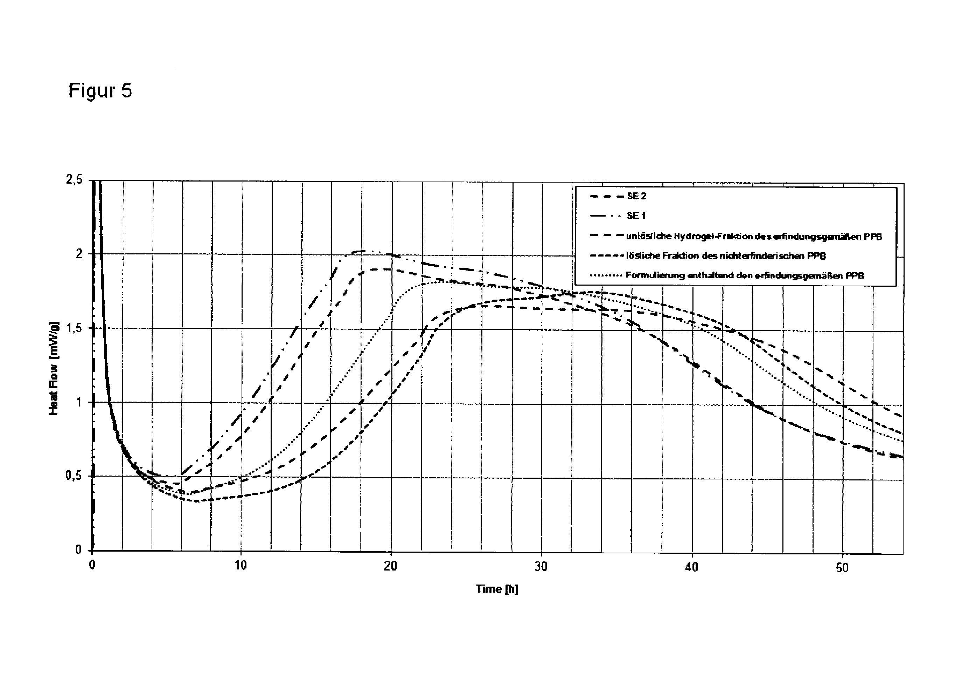

Figur 5 zeigt graphisch die Verzögerungszeit bis zur Versteifung eines Klebe-und Armierungsmörtels eines WDV-Systems, welches erfindungsgemäßen PPB, die unlösliche Hydrogel-Fraktion des erfindungsgemäßen PPB, die nicht-erfindungsgemäße, lösliche Fraktion des erfindungsgemäßen PPB oder herkömmliche Stärkeether (SE1 oder SE2), enthält. Hier ist ersichtlich, dass die erfindungsgemäßen PPB die zusätzlichen Anforderungen erfüllen. Die Beschleunigungsphasen, die nach ca. 6 h beginnen sind bis zum Maximum des Wärmeflusses zum Teil im Bereich der Referenzformulierung SE 1. Gleichzeitig werden bessere Versteifungszeiten erreicht als mit SE 2. Folglich kann durch den erfindungsgemäßen PPB eine geringe Versteifungszeit realisiert werden.

### Beispiel 1 - Herstellung eines erfindungsgemäßen PPB-Hydrogels und Eigenschaften des PPB-Hydrogels

### 1. Herstellung des PPB-Hydrogels

### 1.1 Variation der PPB Rohstoffe

Im Folgenden (Punkte i)-ix)) werden verschiedenen Quellen für Polysaccharide und Proteine aufgeführt, welche als Edukte zur Herstellung des erfindungsgemäßen PPB herangezogen wurden. Die Summe der Inhaltsstoffe ergibt nicht immer 100 %, da Fette, Zucker und die Nicht-Stärke-Polysaccharide nicht ermittelt wurden.

### i) Roggen-Typenmehl 997 (Industriemuster, Walzenvermahlung, Handelsware, Kampffmeyer Mühlen GmbH, Werk Wesermühlen Hameln)

| Inhaltsstoffe: | |
|---|---|
| Stärke: | 74,0-76 % i.T. |
| Protein: | 7,5-8,5 % i.T. |
| Mineralstoffe: | 0,99-1,0 % i.T. |
| Pentosane: | 4,8-5,1 %i.T. |

### ii) Roggenmehl, hergestellt aus gereinigtem Vollkornroggen (Kleintechnische Versuchsmahlung)

Vermahlung mittels Walzenmahlstuhl (6 Passagen) und anschließender Sichtprozesse mittels Siebung. Nach jeder Zerkleinerung erfolgt die Trennung in Mehl, Schale, Grieß/Dunst.

Die resultierenden 6 Passagenmehle wurden zu einem Gesamtmehl zusammen geführt. Daneben entstehen 2 Kleiefraktionen.

| Inhaltsstoffe: | |
|---|---|
| Stärke: | 81,0-85,0 % i.T. |
| Protein: | 4,5-6,0 % i.T. |
| Mineralstoffe: | 0,5-0,7 % i.T. |
| Pentosane: | 1,8-3,0% i.T. |

### iii) Roggenvollkornmehl, hergestellt aus gereinigtem Vollkornroggen (Kleintechnische Versuchsmahlung)

Vermahlung mittels Stiftmühle (Prallmühle) zwischen 3 Mahlstiftreihen, keine Sichtung/Siebung

| Inhaltsstoffe: | |
|---|---|
| Stärke: | 65,0-66,0 % i.T. |
| Protein: | 9,0-10,0 % i.T. |
| Mineralstoffe: | 1,5-1,6% i.T. |
| Pentosane: | 7,0-8,0% i.T. |

### iv) Roggenmehl , hergestellt aus gereinigtem Vollkornroggen (Kleintechnische Versuchsmahlung)

Vermahlung mittels Rotor-Mühle. Das Zerkleinerungsprinzip der Rotor Mühlen beruht auf Prallbeanspruchungen, die im Wesentlichen durch Partikel-Partikel-Interaktionen in turbulenten Luftströmungen verursacht werden. Weitere Zerkleinerungsarbeit wird durch die am Gehäuse und am Rotor installierten Prallwerkzeuge erbracht. Anschließender Sichtprozess mittels Siebung

| Inhaltsstoffe: | |
|---|---|
| Stärke: | 74,0-75,0 % i.T. |
| Protein: | 8,0-9,0% i.T. |
| Mineralstoffe: | 0,9-1,0% i.T. |
| Pentosane: | 4,5-5,0% i.T. |

### v) Roggenmehl, hergestellt aus gereinigtem Vollkornroggen (Kleintechnische Versuchsmahlung)

Vermahlung mittels Walzenstuhl und anschließender Sichtprozesse (siehe 1.). Mahldiagramm auf Erhöhung des Proteinanteiles ausgelegt.

| Inhaltsstoffe: | |
|---|---|
| Stärke: | 55,0-60,0 % i.T. |
| Protein: | 14,0-15,0 % i.T. |
| Mineralstoffe: | 1,3-1,5 % i,T. |

### vi) Weizen-Typenmehl 550, Industriemuster, Walzenvermahlung, Handelsware

(Bereiche der Analysenwerte aus: Souci, Fachmann, Kraut: "Food Composition and Nutrition Tables", Wiss. Verlagsgesellschaft mbH Stuttgart, 1986

| Inhaltsstoffe: | |
|---|---|
| Stärke: | 81,7 % i.T. |
| Protein: | 11,6-13,1 % i.T. |
| Mineralstoffe: | 0,49-0,57 % i.T. |

### vii) Weizenmehl, Weizenmehl Pro 7, stärkeangereichertes Mehl, Industrievermahlung, Kampffmeyer Mühlen GmbH, Werk Wesermühlen Hameln

Industriell hergestelltes stärkeangereichertes Weizenmehl. Walzenvermahlung, anschließende Feinstvermahlung und Sichtung

| Inhaltsstoffe: | |
|---|---|
| Stärke: | 85,0-86,0 % i.T. |
| Protein: | 7,0-8,0 % i.T. |
| Mineralstoffe: | 0,4-0,5 % i.T. |
| Pentosane: | 1,5-2,0 % i.T. |

### viii) Gerstenmehl, hergestellt aus Gerstenvollkorn (Kleintechnische Versuchsmahlung)

Abschleifen der Schalenschichten, Vermahlung mittels Walzenstuhl und anschließender Sichtprozesse mittels Siebung

| Inhaltsstoffe: | |
|---|---|
| Stärke: | 80,0-85,0 % i.T. |
| Protein: | 8,5-9,5 % i.T. |
| Mineralstoffe: | 0,8-1,0 % i.T. |
| Pentosane: | 1,0-1,5% i.T. |

### ix) Gerstenmehl, hergestellt aus Gerstengraupen

(Bereiche der Analysenwerte aus: Souci, Fachmann, Kraut: "Food Composition and Nutrition Tables", Wiss. Verlagsgesellschaft mbH Stuttgart, 1986)

| Inhaltsstoffe: | |
|---|---|
| Stärke: | 70,8 % i.T. |
| Protein: | 8,9-13,7 % i.T. |
| Mineralstoffe: | 1,0-1,9% i.T. |

### 1.2 Derivatisierung und Vernetzung

Als PPB wurde Roggenmehl enthaltend 83,9 Gew.-% Stärke und 5,4 Gew.-% Protein verwendet.

Zunächst wurde eine Menge von 1065 g Wasser in einem Reaktor vorgelegt und unter Rühren 9,34 g CaO zugegeben. Anschließend wurden 335 g Roggenmehl (300 g atro) unter Rühren bei Raumtemperatur in die alkalische Lösung gegeben und 2 h gerührt.

Nach dieser Behandlung war das Roggenmehl partiell gelöst und vollständig gequollen. Nach Dispergierung der alkalischen Mehlsuspension wurden 107,5 g Epoxypropan als nicht-vernetzendes Derivatisierungsreagenz zugegeben. Es wurde bei 35 °C für 24 Stunden gerührt.

Nach Ablauf der 24 Stunden wurden 1,712 g Epichlorhydrin als vernetzendes Derivatisierungsreagenz zugegeben und bei 35 °C für 24 Stunden gerührt. Abschließend wurde das Produkt mit 0,5 N H₂SO₄ neutralisiert, getrocknet und vermahlen.

Als Produkt wurde ein chemisch derivatisierter Polysaccharid-Protein-Blend (PPB) erhalten, welcher in wässrigem Medium ein Hydrogel ausbildet.

Der molare Veretherungsgrad des Produktes betrug MS = 0,5 und der Substitutionsgrad DS = 0,23.

Das nach dem erfindungsgemäßen Verfahren produzierte Rohprodukt des PPB-Hydrogels kann fraktioniert und dadurch weiter aufgereinigt werden. Hierfür wird das Rohprodukt mit ca. 5 Gew.-% Wasser verdünnt und 40 Gew.-% Ethanol zugegeben. Anschließend wird die entstandene Dispersion bei 38.600 g für 1,5 Stunden abzentrifugiert. Bei dem Bodensatz nach der Zentrifugation handelt es sich um das erfindungsgemäße PPB-Hydrogel. Gegebenenfalls können weitere Waschschritte und Zentrifugationsschritte zur Aufreinigung angewandt werden.

Um einen trockenen erfindungsgemäßen PPB zu erhalten wird der Bodensatz mit Aceton entwässert, über Nutsche abgesaugt, bei 50 °C vakuumgetrocknet und anschließend vermahlen. Hierbei wird ein trockener PPB erhalten, welcher sehr rein ist und in wässrigem Medium ein Hydrogel ausbildet.

Ferner wurde die Herstellung des erfindungsgemäßen PPB mit einer Reihe an verschiedenen Parametern durchgeführt. Die verschiedenen Parameter lauten:
➢ Quelle der Polysaccharide und Proteine
➢ Gewichtsverhältnis von den Polysacchariden zu den Proteinen
➢ Art und Menge von nicht-vernetzendem Derivatisierungsreagenz
➢ Art und Menge an vernetzendem Derivatisierungsreagenz
➢ Fraktionierung

Die Ergebnisse der Herstellungsverfahren sind in den Tabellen 1-5 aufgeführt.

**Tabelle 1: PPB-Derivate: Variation des Rohmaterials**

| PPB | Polysaccharid^{1 )} [%] | Protein [%] | Reagen z | Mol-Äquiv ⁸⁾ | Katalysator | Präparation²⁾ | MS(HP)³⁾ |
|---|---|---|---|---|---|---|---|
| Roggenmehl⁴⁾ | 83,9 | 5,4 | PO⁷⁾ | 0,30 | CaO | nein | 0,18 |
| Roggenmehl⁴⁾ | 83,9 | 5,4 | PO | 1,00 | CaO | ja | 0,60 |
| Roggenmehl⁴⁾ | 83,9 | 5,4 | PO | 1,50 | CaO | ja | 0,76 |
| Weizenmehl⁵⁾ | 85,5 | 8,4 | PO | 0,30 | CaO | nein | 0,08 |
| Weizenmehl⁵⁾ | 85,5 | 8,4 | PO | 1,00 | CaO | ja | 0,49 |
| Gerstenmehl⁶⁾ | 81,7 | 9,1 | PO | 0,30 | CaO | nein | 0,07 |
| Gerstenmehl⁶⁾ | 81,7 | 9,1 | PO | 1,00 | CaO | ja | 0,12 |

| | | | | | | | |
|---|---|---|---|---|---|---|---|
| ¹⁾ Polysaccharid = Amylose/Amylopektin ²⁾ Neutralisation des Katalysators mit H₂SO₄ ³⁾ MS(HP) = Molare Substitution von Hydroxypropylether (ermittelt über NMR-Spektroskopie) ⁴⁾ Roggenmehl: 20080505/1-Rg ⁵⁾ Weizenmehl: 20080401/1-Wz ⁶⁾ Gerstenmehl: 20080417/2-Gs ⁷⁾ PO = 1,2-Epoxypropan (Propylenoxid) ⁸⁾ Mol-Äquivalent im Verhältnis zu einer Anhydroglucoseeinheit (M_{AGE} = 162,9 g/mol) | | | | | | | |

**Tabelle 2: Vernetzte PPB-Derivate (Hydrogele): Variation des Polysaccharid/Protein-Anteils**

| PPB¹⁾ | | Reagenz | Mol-Äquiv.^{6 )} | Vernetzungsmittel | Mol-Äquiv 6) | Katalysator | MS(HP)³⁾ |
|---|---|---|---|---|---|---|---|
| Polysaccharid² [%] | Protein [%] | | | | | | |
| 83,9 | 5,4 | PO⁴⁾ | 1,00 | ECH⁵⁾ | 0,01 | CaO | 0,56 |
| 58,7 | 14,4 | PO | 1,00 | ECH | 0,01 | CaO | n.b. |

| | | | | | | | |
|---|---|---|---|---|---|---|---|
| ¹⁾ Roggenmehl: 20080505/1-Rg and 20090409/3-Rg ²⁾ Polysaccharid = Amylose/Amylopektin ³⁾ MS(HP) = Molare Substitution von Hydroxypropylether (ermittelt über NMR-Spektroskopie) ⁴⁾ PO = 1,2-Epoxypropan (Propylenoxid) ⁵⁾ ECH = Epichlorhydrin ⁶⁾ Mol-Äquivalent im Verhältnis zu einer Anhydroglucoseeinheit (M_{AGE} = 162,9 g/mol) | | | | | | | |

**Tabelle 3: PPB-Derivate: Variation des Derivatisierungs-Reagenzes**

| PPB | Reagenz | Mol-Äquiv.⁷⁾ | Katalysator | Präparation¹⁾ | MS(HP)²⁾ DS(N)³⁾ |
|---|---|---|---|---|---|
| Roggenmehl | PO⁴⁾ | 1,00 | CaO | ja | 0,60 |
| Roggenmehl | GTMACI⁵⁾ | 0,033 | NaOH | ja⁶⁾ | 0,02 |
| Roggenmehl | 1.) PO | 1,00 | CaO | ja | 0,45 |
| | 2.) GTMACI | 0,20 | | | 0,11 |

| | | | | | |
|---|---|---|---|---|---|
| ¹⁾ Neutralisation des Katalysators mit H₂SO₄ ²⁾ MS(HP) = molare Substitution von Hydroxypropylether (ermittelt über NMR-Spektroskopie) ³⁾ DS(N) = Substitutionsgrad von N,N,N-trimethyl-1-ammonium-2-hydroxy-propylether ⁴⁾ PO = 1,2-Epoxypropan (Propylenoxid) ⁵⁾ GTMAC = Glycidyltrimethylammoniumchlorid ⁶⁾ Neutralisation mit HCl ⁷⁾ Mol-Äquivalent im Verhältnis zu einer Anhydroglucoseeinheit (M_{AGE} = 162,9 g/mol) | | | | | |

**Tabelle 4: PPB-Hydrogele: Variation der Menge an Vernetzungsmittel**

| PPB | Reagenz | Mol-Äquiv.⁷⁾ | Vernetzung smittel | Mol-Äquiv.⁷⁾ | Katalysator | Präparation¹⁾ | MS(HP)²⁾ |
|---|---|---|---|---|---|---|---|
| Roggenmehl³⁾ | PO⁴⁾ | 1,00 | ECH⁵⁾ | 0,1 | CaO | nein | 0,56 |
| Roggenmehl³⁾ | PO | 1,00 | ECH | 0,01 | CaO | nein | 0,63 |
| Roggenmehl⁶⁾ | PO | 1,00 | ECH | 0,01 | CaO | nein | n.b. |

| | | | | | | | |
|---|---|---|---|---|---|---|---|
| ¹⁾ Neutralisation des Katalysators mit H₂SO₄ ²⁾ MS(HP) = Molare Substitution von Hydroxypropylether (ermittelt über NMR-Spektroskopie) ³⁾ Roggenmehl: 20080505/1-Rg (83,9% Amylose/Amylopektin, 5,4% Protein) ⁴⁾ PO = 1,2-Epoxypropan (Propylenoxid) ⁵⁾ ECH = Epichlorhydrin ⁶⁾ Roggenmehl: 20070723/2-Rg (Industriemehl) ⁷⁾ Mol-Äquivalent im Verhältnis zu einer Anhydroglucoseeinheit (M_{AGE} = 162,9 g/mol) | | | | | | | |

**Tabelle 5: Fraktionierung der vernetzten PPB-Derivate**

| PPB | Reagenz | Mol-Äquiv.⁶⁾ | Vernetzungsmittel | Mol-Äquiv. 6) | Katalysator | Präparation¹⁾ | MS(HP)²⁾ |
|---|---|---|---|---|---|---|---|
| Roggenmehl³ ) | PO⁴⁾ | 1,00 | ECH⁵⁾ | 0,01 | CaO | no | n.d. |
| Fraktionierung | | | | | | | |
| Waterunlösliche Fraktion (derivatisiertes PPB-Hydrogel) | | | | | | | 0,51 |
| Waterlösliche Fraktion (derivatisiertes PPB) | | | | | | | 0,57 |

| | | | | | | | |
|---|---|---|---|---|---|---|---|
| ¹⁾ Neutralisation des Katalysators mit H₂SO₄ ²⁾ MS(HP) = Molare Substitution von Hydroxypropylether (ermittelt über NMR-Spektroskopie) ³⁾ Roggenmehl: 20080505/1-Rg (83,9% Amylose/Amylopektin 5,4% Protein) ⁴⁾ PO = 1,2-Epoxypropan (Propylenoxid) ⁵⁾ ECH = Epichlorhydrin ⁶⁾ Mol-Äquivalent im Verhältnis zu einer Anhydroglucoseeinheit (M_{AGE} = 162,9 g/mol) | | | | | | | |

### 2. Eigenschaften des PPB-Hydrogels

### 2.1 Rheologische Eigenschaften

Das PPB-Hydrogel Rohprodukt und das aufgereinigte PPB-Hydrogel wurden mit einer Konzentration von 5 Gew.-% bei pH 12 bei Raumtemperatur dispergiert und dann im Fließerhalten (scherratenabhängige Viskosität) und in der dynamischen Rheologie (Frequenzsweep) charakterisiert. Alle Lösungen waren optisch homogen, eine Sedimentation wurde nicht beobachtet.

Die rheologischen Eigenschaften, das Fließverhalten in Abhängigkeit von der Scherrate und die dynamische Rheologie in Abhängigkeit von der Frequenz, 5%-iger alkalisch-wässriger PPB-Hydrogel-Dispersionen sind in Fig. 1 dargestellt.

Aus der Untersuchung des Fließverhaltens des PPB-Hydrogel Rohproduktes wurde der Befund erhalten, dass im Scherratenbereich von 1-1000 s⁻¹ eine Abhängigkeit der Viskosität von der Scherrate bestand (siehe Fig. 1A). Bei den niedrigsten Scherraten wurden Viskositäten zwischen 1000 und 4000 mPa·s gemessen, bei den höchsten Scherraten eine Größenordnung niedriger.

Der Frequenzsweep der gleichen Proben des PPB-Hydrogel Rohproduktes zeigt eindeutig, dass im Frequenzbereich von 10⁻¹ bis 10 s⁻¹ die Werte für den Speichermodul G' größer waren als für den Verlustmodul G" (siehe Fig. 1B). Des Weiteren bestand eine geringe Abhängigkeit der Werte G' und G" von der im Frequenz im Bereich von 10⁻¹ bis 2 s⁻¹. Das bedeutet, es lag eine Hydrogelstruktur vor.

In Fig. 2A sind die Fließkurven von dem aufgereinigten PPB-Hydrogel dargestellt. Ferner ist in Fig. 2A auch die "lösliche Fraktion" dargestellt d.h. die Fraktion aus dem Reinigungsverfahren, welche kein PPB-Hydrogel enthält (= Überstand nach Zentrifugation). Es wird deutlich, dass durch die Aufreinigung des PPB-Hydrogels die Viskosität im Vergleich zum Rohprodukt erhöht ist (Fig. 2A vs. Fig. 1A). Die "lösliche Fraktion" weist bei gleicher Konzentration eine um mehrere Größenordnungen niedrigere Viskosität auf. Es handelt sich hierbei vermutlich um Makromoleküle, welche nicht chemisch kovalent mit dem Roggenmehl-Hydrogel verbunden sind. Es kann ferner gefolgert werden, dass die Viskosität des Rohprodukts - wie erwartet - von dem PPB-Hydrogel bestimmt wird.

In Fig. 2B ist der Frequenzsweep des aufgereinigten PPB-Hydrogels dargestellt. Die Werte des Speichermoduls lagen im Vergleich zu dem PPB-Hydrogel Rohprodukt signifikant höher. Der Unterschied der Werte für G' und G" war im Fall des aufgereinigten PPB-Hydrogels größer (Fig. 1B vs. 2B).

Sowohl in der Synthese und als auch bei der Fraktionierung des Hydrogelanteils wurde eine sehr gute Reproduzierbarkeit erreicht (Figuren 1 und 2).

Generell kann konstatiert werden: Je höher der Anteil der elastischen Komponente im erfindungsgemäßen PPB - d.h., je größer G' als G" - desto intensiver die Hydrogelstruktur und damit das erforderliche Hydrogelverhalten dieser Additive in Trockenmörtelanwendungen, was formulierungstechnisch zu einer verbesserten Applikation führt.

Die viscoelastischen Eigeschaften eines hydroxypropylierten und partiell vernetzten PPB auf Basis von Roggenmehl, welches 83,9 Gew.-% Stärke und 5,4 Gew.-% Protein enthielt, wurden mit einem kommerziellen Stärkeether (SE1) verglichen. Der PPB kann als vernetzte Hydroxypropylstärke mit einem molaren Substitutionsgrad für die Hydroxypropylgruppe von 0,54 und einem löslichen Anteil von 42 % beschrieben werden.

Zum Vergleich wurde beide Proben wurden mit einer Konzentration von 5 Gewichts-% bei pH 12 bei Raumtemperatur dispergiert und dann im Fließerhalten (scherratenabhängige Viskosität) und in der dynamischen Rheologie (Frequenzsweep) charakterisiert.

In Figur 3A ist der Vergleich des Fließverhaltens dargestellt. Die Viskosität des modifizierten PPB war in dem untersuchten Scherratenbereich signifikant höher als die Viskosität von SE1.

In Figur 3B ist der Vergleich des Frequenz-Sweeps dargestellt. Im Fall von SE 1 ist ersichtlich, dass Speicher (G') - und Verlust (G") Modul nahezu gleich groß sind und in Abhängigkeit von der Frequenz ansteigen. Es handelt sich hierbei um das typische Verhalten einer viskoelastischen Lösung. Für den modifizierten PPB sind folgende Daten charakteristisch:
- signifikant höhere Werte für G' und G" als SE1
- signifikant höhere Werte für G' in einem breiten Frequenzbereich als SE1
- nahezu keine Frequenzabhängigkeit zwischen 0,1 und 1 Hz.

Der modifizierte PPB zeigte das typische Verhalten eines Hydrogels.

### 2.2 Löslicher Anteil

Zunächst wurde mittels GPC der lösliche Anteil des gemäß Punkt 1. hergestellten PPB-Hydrogels (= erfindungsgemäßer PPB) gemessen und mit dem löslichen Anteil des PPB-Hydrogels nach der unter Punkt 1. beschriebenen, einfachen Fraktionierung verglichen (= unlösliche Hydrogel-Fraktion des erfindungsgemäßen PPB) (Tabelle 6).

**Tabelle 6: Löslicher Anteil von erfindungsgemäßem PPB und Fraktionen**

| **Erfindungsgemäßer PPB/Fraktion** | **Löslicher Anteil [%]** |
|---|---|
| Erfindungsgemäßer PPB | 11,0 |
| Unlösliche Hydrogel-Fraktion des erfindungsgemäßen PPB | 9,0 |
| Nicht-erfinderische, lösliche Fraktion des erfindungsgemäßen PPB | 62,0 |
| Unlösliche Hydrogel-Fraktion des erfindungsgemäßen PPB (reproduziert) | 11,0 |
| Nicht-erfinderische, lösliche Fraktion des erfindungsgemäßen PPB (reproduziert) | 64,0 |

Der lösliche Anteil der unlöslichen Hydrogel-Fraktion des erfindungsgemäßen PPB ist erwartungsgemäß geringer als der lösliche Anteil des erfindungsgemäßen PPB. Der Grund hierfür ist vermutlich, dass durch die Fraktionierung lösliche Makromoleküle vom erfindungsgemäßen PPB abgetrennt werden (= nicht erfinderische, lösliche Fraktion des erfindungsgemäßen PPB), welche im erfindungsgemäßen PPB enthalten sind, aber mit dem erfindungsgemäßen PPB-Hydrogel nicht chemisch kovalent vernetzt sind.

### Beispiel 2 - PPB als Zusatz in einer hydraulisch erhärtende Formulierung

Der erfindungsgemäße PPB kann beispielsweise in einer hydraulisch erhärtenden Formulierung in der Bauchemie verwendet werden. Beispielsweise hat die Formulierung folgende Zusammensetzung:

| | |
|---|---|
| Zement: | 37,50 Gew.-% |
| Quarzsand (0,05 - 0,4 mm): | 53,20 Gew.-% |
| Kalksteinmehl: | 5,50 Gew.-% |
| Cellulosefasern: | 0,50 Gew.-% |
| Calciumformiat: | 2,80 Gew.-% |
| Celluloseether: | 0,35 Gew.-% |
| Polyacrylamid: | 0,05 Gew.-% |
| PPB: | 0,10 Gew.-% |

Der Wasserbedarf liegt bei ca. 360 g/kg Trockenmörtel. Die Verwendung von PPB statt einem Stärkeether in dieser Formulierung hat den Vorteil, dass eine sehr geringe Abbindeverzögerung (Erstarrungszeit) erreicht wird und gleichzeitig Eigenschaften wie Klebe-Offene-Zeit, Standvermögen (hohe Abrutschfestigkeit) und gute Verarbeitbarkeit erhalten bleiben. Optional kann durch den Zusatz der PPB in die Formulierung auch eine Verdickerwirkung erreicht werden.

### Beispiel 3 - PPB als Zusatz in einer Normenmörtel-Formulierung

In der einfachsten Form handelt es sich bei dem Normenmörtel um ein Baustoffsystem, welches lediglich aus Sand, Zement und Wasser besteht. Ein Normenmörtel enthaltend die erfindungsgemäßen PPB kann folgende Zusammensetzung aufweisen:

| | |
|---|---|
| Normensand: | 75,00 Gew.-% |
| Zement Karlstadt CEM I 42,5R: | 25,00 Gew.-% |
| PPB: | 0,03 Gew.-% |

Der Wasserbedarf des Mörtels liegt bei ca. 250 g/kg Trockenmörtel.

Normenmörtel ohne die erfindungsgemäßen PPB (= "Referenz ohne Additiv") und Normenmörtel enthaltend die erfindungsgemäßen PPB oder enthaltend jeweils einen handelsüblichen Stärkeether wurden auf ihr Ausbreitmaß untersucht.

Die Ergebnisse sind in Tabelle 7 zusammengefasst.

**Tabelle 7**

| ***Formulierung*** | ***Additiv [Gew.-%]*** | ***Ausbreitmaß nach 3 min [cm]*** |
|---|---|---|
| Referenz ohne Additiv | - | 21,3 |
| Formulierung enthaltend den erfindungsgemäßen PPB | 0,03 | 13,0 |
| Formulierung enthaltend die unlösliche Hydrogel-Fraktion des erfindungsgemäßen PPB | 0,03 | 13,1 |
| Formulierung enthaltend die nicht-erfinderische, lösliche Fraktion des erfindungsgemäßen PPB | 0,03 | 17,9 |
| Formulierung enthaltend SE 1 | 0,03 | 18,1 |
| Formulierung enthaltend SE 2 | 0,03 | 17,8 |

| | | |
|---|---|---|
| SE 1 = Starvis® SE25F (BASF Construction Polymers GmbH), SE 2 = Amylotex® 8100 (Ashland) | | |

Die Formulierung enthaltend den erfindungsgemäßen PPB und dessen unlösliche Hydrogel-Fraktion produzierten die stärkste Verdickung und sind somit hervorragend für standfeste Systeme geeignet. Vergleicht man die Eigenschaften der unlöslichen Hydrogelfraktion mit der löslichen Fraktion des erfindungsgemäßen PPB erkennt man deutlich den Vorteil der Hydrogelstruktur als Wirkeigenschaft.

Die erfindungsgemäßen PPB zeigen im Vergleich zu den herkömmlich verwendeten Stärkeethern (SE 1 oder SE 2) die besten Verdickungseigenschaften und sind deshalb hervorragend für den Einsatz in einer Fliesenkleberformulierung oder einem Klebe- und Armierungsmörtel geeignet.

### Beispiel 4 - PPB als Zusatz in einem Klebe- und Armierungsmörtel für Wärmedämmverbundsysteme (WDVS)

Die Kriterien an einen Kleber für ein gutes WDVS sind ein gutes Standvermögen, eine lange Klebe-Offene-Zeit und kurze Versteifungszeiten. Ein schnelles Versteifen des Klebers nach Anbringen der Dämmplatten ist notwendig, um die weiteren Verarbeitungsschritte (z.B. Armieren) nicht zu verzögern. Hierbei gilt, dass eine Verringerung der Temperatur, beispielsweise bewirkt durch ein kaltes Klima, die Versteifungszeit exponentiell ansteigen lässt. Gleichzeitig ist aber eine lange Klebe-Offene-Zeit erwünscht d.h. eine möglichst lange Zeit, in welcher sich das Armierungsgitter einarbeiten lässt.

Diese Anforderungen werden dadurch erreicht, indem erfindungsgemäße PPB als Additive in Klebe- und Armierungsmörtel für WDV-Systeme eingesetzt werden. Beispielsweise hat ein solcher Klebe- und Armierungsmörtel folgende Zusammensetzung:

| | |
|---|---|
| Portlandzement, grau: | 20,000 Gew.-% |
| Quarzsand (0,1-0,4 mm): | 29,290 Gew.-% |
| Quarzsand (0,3 -1,0 mm): | 30,000 Gew.-% |
| Kalksteinmehl: | 8,000 Gew.-% |
| Dispersionspulver: | 2,000 Gew.-% |
| Cellulosefasern: | 0,300 Gew.-% |
| Hydrophobierungsmittel: | 0,200 Gew.-% |
| Celluloseether 1: | 0,130 Gew.-% |
| Celluloseether 2: | 0,150 Gew.-% |
| Acrylfaser: | 0,030 Gew.-% |
| PPB: | 0,035 Gew.-% |

Der Wasserbedarf liegt bei ca. 230 g/kg Trockenmörtel d.h. man stellt einen W/Z (Wasser-Zement-Wert) von 1,15 ein.

Klebe- und Armierungskleber ohne die erfindungsgemäßen PPB und Klebe-und Armierungskleberrezepturen enthaltend 0,035 Gew.-% erfindungsgemäße PPB oder enthaltend jeweils 0,035 Gew.-% von einem handelsüblichen Zusatz aus dem Stand der Technik (SE 1 oder SE 2) wurden auf das Ausbreitmaß und die Versteifungszeiten untersucht. Bei den Additiven aus dem Stand der Technik handelt es sich im Wesentlichen um chemisch modifizierte Stärkeether.

Für die Bestimmung des Ausbreitmaßes wurden auf einem Ausbreittisch eine Glasplatte und mittig darauf ein Hägermann-Trichter gelegt. Der Trichter wurde nun mit der Klebemörtelmischung befüllt. Es wurde darauf geachtet, dass der Trichter gleichmäßig und ohne Lufteinschluss befüllt wird. Nachdem überschüssiges Produkt oben mit einer Spachtel glatt abgezogen wurde, wurde der Trichter aufgehoben und benetztes Produkt zum Mörtelkuchen dazu gegeben. Der Ausbreittisch wurde gestartet und mit 15 Hüben der Mörtel auf der Glasplatte verteilt. Das Ausbreitmaß wurde mit einer Schieblehre (zwei Mal über Kreuz) bestimmt.

Zur Bestimmung der Versteifungszeiten mit dem Wärmekalorimeter wird ein Klebe- und Armierungsmörtel mit einem Mischer (Rilem) angemischt. Direkt nach Mischende werden ca. 6 g des Produkts in ein Fläschchen gegeben. Probefläschchen und dazugehörige Blindprobe werden in denselben Kanal des Kalorimeters überführt. Bei der Festlegung der Parameter ist darauf zu achten, dass die Messungen unter isothermen Bedingungen bei 20 °C ± 0,1 °C laufen und die exakte Masse der Probe eingetragen wird.

Die durch die freigesetzte Wärme entstehende Energie der Probe wird durch das Wärmeflusskalorimeter festgehalten. Bei der graphischen Erfassung des Wärmeflusses mit dem Wärmeflusskalorimeter wird die Wärmeentwicklung (in mW / g Einwaage Zement) in Abhängigkeit von der Zeit (in Stunden) erfasst.

Die Ergebnisse sind in Tabelle 8 zusammengefasst.

**Tabelle 8**

| ***Formulierung*** | ***Ausbreitmaß [cm]*** |
|---|---|
| Referenz ohne Additiv | 17,4 |
| Formulierung enthaltend den erfindungsgemäßen PPB | 16,6 |
| Formulierung enthaltend die unlösliche Hydrogel-Fraktion des erfindungsgemäßen PPB | 16,6 |
| Formulierung enthaltend die nichterfinderische, lösliche Fraktion des erfindungsgemäßen PPB | 17,0 |
| Formulierung enthaltend SE 1 | 16,9 |
| Formulierung enthaltend SE 2 | 16,1 |

| | |
|---|---|
| SE 1 = Starvis® SE25F (BASF Construction Polymers GmbH), SE 2 = Amylotex® 8100 (Ashland) | |

Der W/Z-Wert und die Dosierungen der PPBs wurden bei den anwendungstechnischen Versuchen immer konstant gehalten. Mit dem Ausbreitmaß erzielt man nicht nur Rückschlüsse auf die Viskosität des Baustoffsystems, sondern erhält auch Hinweise auf die Verarbeitung. Allgemein kann nicht gesagt werden, welcher Wert des Ausbreitmaßes optimal ist.

Folglich wurde festgelegt, dass ein Ausbreitmaß von 16,5 cm ± 0,5 cm einen Bereich darstellt, in welchem die Qualität sowohl im oberen als auch im unteren Ausbreitmaßbereich geeignet für eine gute Verarbeitung ist.

Im Klebe- und Armierungsmörtel zeigen die Formulierungen enthaltend den erfindungsgemäßen PPB oder die unlösliche Hydrogel-Fraktion des erfindungsgemäßen PPB eine akzeptable Verdickung im Vergleich zu SE 1 aus dem Stand der Technik. Die Formulierung enthaltend SE 2 ist dagegen im festgelegten Ausbreitmaß-Bereich auf einem niedrigeren Niveau.

Beim Vermischen von Klebe- und Armierungsmörtel (in Pulverform) und Wasser wird sofort eine hohe Wärmeenergie gebildet, die sich durch einen hohen Wärmefluss zwischen 0 und 1 Stunde bemerkbar macht (Wärmefluss > 10 mW/g). Dies ist auf die Aluminatreaktion unter Bildung von Ettringit zurückzuführen. Der Hydratationsverlauf geht anschließend in eine Ruhephase (ca. 1-5 h /dormante Phase) über, bei der ein Minimum im Wärmefluss ausgeprägt ist. Beinhaltet das Baustoffsystem stärker verzögernde Additive ist die dormante Phase deutlicher ausgeprägt und charakterisiert durch einen längeren Zeitraum minimalen Wärmeflusses.

Mit dem Ansteifen des Systems beginnt die Beschleunigungsphase, die durch einen Anstieg des Wärmeflusses gekennzeichnet ist. Die Beschleunigungsphase spiegelt die Silikatreaktion unter Bildung von Calciumhydroxid sowie Calcium-Silikat-Hydrat wider. Der Zeitpunkt des Beginns der Beschleunigungsphase ist direkt von der Verzögerungswirkung des Additivs abhängig.

Bei der Bestimmung der Verzögerungszeiten mit dem Wärmekalorimeter ist in Klebe- und Armierungsmörteln ersichtlich, dass die erfindungsgemäßen PPB die zusätzlichen Anforderungen erfüllen (siehe Figur 5). Die Beschleunigungsphasen (Beginn nach ca. 6 h) bis zum Maximum des Wärmeflusses sind zum Teil im Bereich der Referenzformulierung SE 1. Gleichzeitig werden bessere Versteifungszeiten erreicht als mit SE 2, welches als typisches Produkt in Klebe- und Armierungsmörtel für WDV-Systeme gilt.

Es kann daher geschlossen werden, dass die erfindungsgemäßen PPB als Additive für Klebe- und Armierungsmörtelformulierungen eine vorteilhafte Alternative zu bekannten Additiven aus dem Stand der Technik darstellen. Neben einem guten Standvermögen (Tabelle 8) wird durch die erfindungsgemäßen PPB auch eine geringe Versteifungszeit realisiert (Figur 5).

### Beispiel 5 - PPB als Zusatz in einer Fliesenkleber-Formulierung

Ein Fliesenkleber enthaltend die erfindungsgemäßen PPB kann die folgende Zusammensetzung aufweisen:

| | |
|---|---|
| Zement: | 37,50 Gew.-& |
| Quarzsand (0,05 - 0,40 mm): | 49,50 Gew.-% |
| Kalksteinmehl: | 5,50 Gew.-% |
| Dispersionspulver: | 3,50 Gew.-% |
| Cellulosefasern: | 0,50 Gew.-% |
| Calciumformiat: | 3,00 Gew.-% |
| Celluloseether: | 0,35 Gew.-% |
| Polyacrylamid: | 0,05 Gew.-% |
| PPB: | 0,10 Gew.-% |

Der Wasserbedarf beträgt ca. 360 g/kg Trockenmörtel d.h. man stellt einen W/Z-Wert von 1,04 ein.

Fliesenkleber-Formulierungen ohne die erfindungsgemäßen PPB (Referenzformulierung) und Fliesenkleber-Formulierungen enthaltend erfindungsgemäßen PPB oder enthaltend jeweils einen handelsüblichen Zusatz aus dem Stand der Technik (SE1 oder SE 2) wurden auf ihr Standvermögen, ihre Viskosität, ihre Klebe-Offene-Zeit und ihre Versteifungszeiten untersucht.

Die Untersuchungen erfolgten It. Norm DIN EN 12004 bei einem Raumklima von 23 +/- 2°C und einer rel. Luftfeuchte von 50 +/- 5%. Folgende Beurteilungskriterien wurden ermittelt:
- Standvermögen (Abrutschverhalten): Bestimmung nach DIN EN 1308
- Viskosität: Es wurde das rheologische Verhalten der Fliesenklebermischung bei einem W/Z-Wert von 1,04 untersucht. Angewandt wurden hierbei ein Brookfield-Viskosimeter und der zugehörige Spindelsatz (T-Spindel). Die Spindel wurde bis zu einer bestimmten Tiefe in den befüllten Kunststoffbecher eingeführt und die Messung bei 2,5 U/min durchgeführt. Hierbei wurde darauf geachtet, dass der höchste Wert der Viskosität zu notieren ist (Wert vor Freischeren der Spindel). Diese Bestimmung wurde mehrmals durchgeführt bis ein konstanter Wert erreicht wurde.
- Klebe-Offene-Zeit: Auf eine Betonplatte (Gehwegplatte) wurde mit einer Zahnspachtel (6 mm) ein Fliesenkleberbett im 60°-Winkel aufgezogen. In gleichbleibenden Zeitintervallen (i.d.R. 5 min) wurde eine 5x5 cm nicht saugende Fliese (Wasseraufnahme < 0,5%) ins Kleberbett eingelegt und 30 sec mit 20 N (2 kg) beschwert. Danach wurde die Fliese wieder abgehoben und die Benetzung der Fliese beurteilt. Die Messung wurde weitergeführt, wenn mehr als 50% Benetzung erreicht wurden. Ist die Fliese zu weniger als 50% benetzt, ist das Ende der Offene Zeit erreicht und der Wert wird notiert. Die stetige Verschlechterung der Benetzung der Fliese korreliert mit dem Beginn der Hautbildung.
- Für die Bestimmung der Versteifungszeiten nach Vicat wird ein Kunststoffbecher (Höhe: 40 mm) blasenfrei befüllt, durch Klopfen kurz verdichtet und mit einem Spachtel plan abgezogen. Der Becher wurde anschließend in das Vicat-Gerät platziert. Alle 30 min. dringt die Nadel des Messgeräts in den Prüfkörper ein. Startpunkt zur Zeiterfassung der Versteifung ist der Mischbeginn. Dringt die Nadel nur noch 36 mm in den Prüfkörper ein, ist der Erstarrungsbeginn erreicht. Sticht die Nadel nur noch ca. 4 mm oder weniger in den Prüfkörper ein, ist das Versteifungsende erreicht.
- Wärmekalorimetrische Messungen wurden durchgeführt wie in Beispiel 4 beschreiben.

Die Ergebnisse sind in Tabelle 9 zusammengefasst.

**Tabelle 9**

| ***Formulierung*** | ***Viskosität* [mPas]*** | ***Abrutschen [mm]*** | ***Offene Zeit [min]*** | ***Versteifungsbeginn [h] nach Vicat*** | ***Verstelfungsende [h] nach Vicat*** |
|---|---|---|---|---|---|
| Referenz ohne Additiv | 891.000 | 7,9 | 30 | 7 | 9,1 |
| Formulierung enthaltend den erfindungsgemäßen PPB | 935.000 | 0,38 | 35 | 9,2 | 12,9 |
| Formulierung enthaltend die unlösliche Hydrogel-Fraktion des erfindungsgemäßen PPB | 904.000 | 0,45 | 35 | 8,5 | 10,7 |
| Formulierung enthaltend die nicht-erfinderische, lösliche Fraktion des erfindungsgemäßen PPB | 737.000 | 4,3 | 50 | 12,1 | 14,6 |
| Formulierung enthaltend SE 1 | 840.000 | 4,2 | 32 | 7,3 | 9,5 |
| Formulierung enthaltend SE 2 | 924.000 | 1,1 | 47 | 10,7 | 13,1 |

| | | | | | |
|---|---|---|---|---|---|
| SE 1 = Starvis® SE25F (BASF Construction Polymers GmbH), SE 2 = Amylotex® 8100 (Ashland); *Viskosität der Fliesenkleber-Formulierung (W/Z-Wert: 1,04) | | | | | |

Generell sind die die Anforderung an einen Fliesenkleber eine geringfügige Verzögerung bei gleichzeitig sehr gutem Standvermögen, eine lange Klebe-Offene-Zeit, sehr gute Verarbeitungseigenschaften und eine hohe Klebrigkeit.

Würde man nur ein "gutes Standvermögen" in den Fokus setzen, dann erfüllen nur die erfindungsgemäßen PPB die gemäß DIN EN 1308 gewünschte Messlatte von <0,5 mm (siehe "Abrutschen [mm]" in Tabelle 9).

Jeder der Fliesenkleber-Formulierungen verfügt über eine leichtgängige Konsistenz, gute Klebrigkeit an der Kelle und folglich über eine gute Verarbeitung. Allerdings ist die Viskosität bei der Formulierung enthaltend erfindungsgemäßen PPB am geringsten und am nächsten zu dem Wert der Referenzformulierung, was als positiv zu sehen ist.

Nimmt man die Beurteilungskriterien "Klebe-Offene-Zeit" und "Versteifungszeiten" hinzu (siehe Tabelle 9) erkennt man, dass bei gewünschtem Standvermögen nur die Formulierungen enthaltend erfindungsgemäßen PPB die zusätzlichen Anforderungen erfüllen, denn die Zeiten sind in dem Bereich der Referenzformulierung.

Ebenfalls zeigt die Formulierung enthaltend die erfindungsgemäßen PPB zu den Formulierungen enthaltend SE 1 oder SE 2 einen Vorteil in der Beschleunigung. Eine Verzögerung von nur 1,5 Stunden zur Referenzformulierung ist ein Wert, der als sehr gut beurteilt werden kann (siehe Figur 4).

## Patentansprüche

1. Chemisch derivatisierter Polysaccharid-Protein-Blend enthaltend partiell wasserquellbare Polysaccharide und Proteine, wobei die Polysaccharide und Proteine jeweils zumindest partiell chemisch kovalent modifiziert sind durch
a) mindestens eine nicht-vernetzende Derivatisierung; und
b) mindestens eine vernetzende Derivatisierung, wobei die Polysaccharide und Proteine zumindest partiell chemisch kovalent miteinander vernetzt sind,
**dadurch gekennzeichnet, dass** der chemisch derivatisierte Polysaccharid-Protein-Blend in wässrigem Medium ein Hydrogel ausbildet.

2. Chemisch derivatisierter Polysaccharid-Protein-Blend gemäß Anspruch 1, **dadurch gekennzeichnet, dass** das Hydrogel, bezogen auf seinen wasserfreien Zustand,
a) 20-99 Gew.-%, bevorzugt 55-96 Gew.-%, besonders bevorzugt 70-85 Gew.-% Polysaccharide; und/oder
b) 1-80 Gew.-%, bevorzugt 4-45 Gew.-%, besonders bevorzugt 5-15 Gew.-%, Proteine,
enthält.

3. Chemisch derivatisierter Polysaccharid-Protein-Blend gemäß einem der Ansprüche 1 oder 2, **dadurch gekennzeichnet, dass** die Polysaccharide und Proteine pflanzliche Proteine und/oder Polysaccharide enthalten oder daraus bestehen, bevorzugt Polysaccharide und/oder Proteine aus Getreide, besonders bevorzugt aus Roggen.

4. Chemisch derivatisierter Polysaccharid-Protein-Blend gemäß einem der Ansprüche 1 bis 3, **dadurch gekennzeichnet, dass** die Polysaccharide und Proteine mindestens eine Monosubstitution oder Bisubstitution aufweisen, bevorzugt ausgewählt aus der Gruppe bestehend aus neutraler, hydrophober und kationischer Substitution.

5. Chemisch derivatisierter Polysaccharid-Protein-Blend gemäß einem der Ansprüche 1 bis 4, **dadurch gekennzeichnet, dass** die Polysaccharide und Proteine eine Funktionalisierung mit chemischen Verbindungen aus der Gruppe bestehend aus quaternären Ammoniumsalzen und organischen Chlorverbindungen aufweisen, bevorzugt 3-Chloro-2-hydroxypropyltrimethylammoniumchlorid und/oder 3-Chloro-2-hydroxypropyl-alkyl-dimethylammoniumchlorid, besonders bevorzugt Trialkylammoniumethylchlorid und/oder Trialkylammoniumglycid, wobei die Alkylgruppe insbesondere mindestens eine geradkettige oder verzweigte C₁-C₁₈ Alkylgruppe enthält oder daraus besteht und/oder die Polysaccharide und Proteine eine Hydroxyalkylierung aufweisen, bevorzugt ausgewählt aus der Gruppe der Oxirane, besonders bevorzugt ausgewählt aus der Gruppe bestehend aus Alkylenoxiden mit geradkettigen oder verzweigten C₁-C₁₈ Alkylgruppen, insbesondere Ethylenoxid und/oder Propylenoxid.

6. Chemisch derivatisierter Polysaccharid-Protein-Blend gemäß einem der Ansprüche 1 bis 5, **dadurch gekennzeichnet, dass** die Polysaccharide und Proteine mit einer Menge von 0,001-2,0 mol, bevorzugt 0,01-0,5 mol, besonders bevorzugt 0,1-0,4 mol, nicht-vernetztendem Derivatisierungsreagenz pro mol Anhydroglukoseeinheit der Polysaccharide modifiziert sind und/oder dass die Polysaccharide und/oder Proteine, in Bezug auf die nicht-vernetzende Derivatisierung, einen Substitutionsgrad (DS) von 0,001-1,0, bevorzugt 0,01-0,5, besonders bevorzugt 0,1-0,4, aufweisen.

7. Chemisch derivatisierter Polysaccharid-Protein-Blend gemäß einem der Ansprüche 1 bis 6, **dadurch gekennzeichnet, dass** die Polysaccharide und Proteine mit einer Menge von 0,001-1,0 mol, bevorzugt 0,01-0,5 mol, besonders bevorzugt 0,05-0,2 mol, vernetzendem Derivatisierungsreagenz pro mol Anhydroglucoseeinheit der Polysaccharide modifiziert sind, wobei die Polysaccharide und Proteine bevorzugt über ein Derivatisierungsreagenz ausgewählt aus der Gruppe bestehend aus
a) Epihalohydrin, Diglycidethern und (Poly)alkylenglykoldiglycidylethern, bevorzugt Polyalkylenglykoldiglycidylether mit 1-100 Ethylenglycoleinheiten;
b) Phosphorsäure und Phosphorsäurederivate, bevorzugt Phosphorsäureanhydride, Phosphorsäurechloride und/oder Phosporsäu reester;
c) Bi- oder oligofunktionelle organische Alkyl- und Arylverbindungen, bevorzugt Carbonsäuren und/oder Carbonsäureester;
d) Aldehyde, bevorzugt Formaldehyd, Glutaraldehyd und/oder Glyoxal;
e) Pfropfungsagenzien, bevorzugt Acrylsäure-Verbindungen, substituierte Acrylate, Vinylgruppen-haltige Verbindungen und/oder Aldehyd-Amid-Kondensate; und
f) Halide, bevorzugt Epoxihalide, aliphatische Dihalide, halogeniertes Polyethylenglycol und/oder Diglycoldichlorid,
vernetzt sind.

8. Chemisch derivatisierter Polysaccharid-Protein-Blend gemäß einem der Ansprüche 1 bis 7, **dadurch gekennzeichnet, dass** zumindest ein Teil der Polysaccharide und Proteine in dem chemisch derivatisierten Polysaccharid-Protein-Blend zumindest bereichsweise chemisch kovalent vernetzt sind, bevorzugt über Hydroxyl-, Amino- und/oder Sulfhydrylgruppen auf den Proteinen und/oder Polysacchariden, und/oder zumindest bereichsweise ausschließlich über funktionelle Gruppen chemisch kovalent vernetzt sind, welche aufgrund der nicht-vernetztenden Derivatisierung auf den Polysacchariden und Proteinen vorhanden sind.

9. Chemisch derivatisierter Polysaccharid-Protein-Blend gemäß einem der Ansprüche 1 bis 8, **dadurch gekennzeichnet, dass** der chemisch derivatisierte Polysaccharid-Protein-Blend im alkalischem Milieu einen löslichen Anteil von 0-30 % aufweist.

10. Nasschemisches Verfahren zur Herstellung von einem chemisch derivatisierten Polysaccharid-Protein-Blend, umfassend die Verfahrensschritte
a) Suspendieren von mindestens einem partiell wasserquellbarem Polysaccharid und mindestens einem Protein in einem wässrigen Medium, wobei ein Slurry enthaltend zumindest partiell gequollenes Polysaccharid und Protein entsteht;
b) Partielle, chemisch kovalente Derivatisierung von zumindest einem Teil der Polysaccharide und Proteine durch mindestens ein nicht-vernetzendes Derivatisierungsreagenz; und
c) Partielle, chemisch kovalente Derivatisierung von zumindest einem Teil der Polysaccharide und Proteine durch mindestens ein vernetzendes Derivatisierungsreagenz;
wobei die Schritte a) bis c) gleichzeitig oder nacheinander erfolgen können und in Schritt c) dergestalt vernetzt wird, dass aus dem mindestens einen Polysaccharid und mindestens einem Protein ein Hydrogel entsteht.

11. Verfahren gemäß Anspruch 10, **dadurch gekennzeichnet, dass** in Schritt b) die chemisch kovalente Derivatisierung bei saurem, neutralen oder basischen pH durchgeführt wird und/oder in Schritt c) die chemisch kovalente Derivatisierung bei einem alkalischen pH durchgeführt wird.

12. Verfahren gemäß einem der Ansprüche 10 bis 11, **dadurch gekennzeichnet, dass** in Schritt a) Wasser zugeführt, bis eine Menge von mindestens 40 Gew.-%, bevorzugt 60-90 Gew.-%, besonders bevorzugt 75-85 Gew.-%, Wasser, in Bezug auf die Gesamtmasse des Slurry, erreicht ist.

13. Verfahren gemäß einem der Ansprüche 10 bis 12, **dadurch gekennzeichnet, dass** das Verfahren bei einer Temperatur von 20-90 °C, bevorzugt 30-60 °C, besonders bevorzugt 30-40 °C, durchgeführt wird.

14. Verfahren gemäß einem der Ansprüche 10 bis 13, **dadurch gekennzeichnet, dass** das mindestens eine partiell wasserquellbare Polysaccharid und/oder das mindestens eine Protein ein pflanzliches Polysaccharid und/oder Protein, bevorzugt ein Polysaccharid und/oder Protein aus Getreide, besonders bevorzugt ein Polysaccharid und/oder Protein aus Roggen, enthält oder daraus besteht.

15. Verfahren gemäß einem der Ansprüche 10 bis 14, **dadurch gekennzeichnet, dass** zumindest ein in Schritt b) verwendetes nicht-vernetzendes Derivatisierungsreagenz ausgewählt ist aus der Gruppe bestehend aus neutralen, hydrophoben und kationischen nicht-vernetzenden Derivatisierungsreagenzien, insbesondere
- ein Hydroxyalkylierungsreagenz ist, bevorzugt ausgewählt aus der Gruppe der Oxirane, besonders bevorzugt ausgewählt aus der Gruppe bestehend aus Alkylenoxiden mit geradkettigen oder verzweigten C₁-C₁₈ Alkylgruppen, ganz besonders bevorzugt Ethylenoxid und/oder Propylenoxid und/oder
- ein kationisches Alkylierungsreagenz ist, welches bevorzugt mindestens eine tertiäre oder quartäre Ammoniumgruppe enthält und besonders bevorzugt ausgewählt ist aus der Gruppe bestehend aus Trialkylammoniumethylchlorid und Trialkylammoniumglycid, wobei die Alkylgruppe insbesondere mindestens eine geradkettige oder verzweigte C₁-C₁₈ Alkylgruppe enthält oder daraus besteht,
wobei das mindestens eine Polysaccharid und Protein bevorzugt mit einer Menge von 0,001-2,0 mol, bevorzugt 0,01-0,5 mol, besonders bevorzugt 0,1-0,4 mol, nicht-vernetztendes Derivatisierungsreagenz pro mol Anhydroglukoseeinheit des mindestens einen Polysaccharids modifiziert wird.

16. Verfahren gemäß einem der Ansprüche 10 bis 15, **dadurch gekennzeichnet, dass** zumindest ein Teil des mindestens einen Polysaccharids und Proteins in Schritt c) durch das zumindest eine vernetzende Derivatisierungsreagenz zumindest bereichsweise chemisch kovalent, bevorzugt über Hydroxyl-, Amino- und/oder Sulfhydrylgruppen auf dem mindestens einen Polysaccharid und/oder Protein vernetzt wird und/oder die Vernetzung über die in Schritt b) eingeführte funktionelle Gruppen erfolgt.

17. Verfahren gemäß einem der Ansprüche 10 bis 16, **dadurch gekennzeichnet, dass** das zumindest eine in Schritt c) verwendete vernetzende Derivatisierungsreagenz ausgewählt ist aus der Gruppe bestehend aus
a) Epihalohydrin, Diglycidethern und (Poly)alkylenglykoldiglycidylethern, bevorzugt Polyalkylenglykoldiglycidylether mit 1-100 Ethylenglycoleinheiten;
b) Phosphorsäure und Phosphorsäurederivate, bevorzugt Phosphorsäureanhydride, Phosphorsäurechloride und/oder Phosporsäureester;
c) Bi- oder oligofunktionelle organische Alkyl- und Arylverbindungen, bevorzugt Carbonsäuren und/oder Carbonsäureester;
d) Aldehyde, bevorzugt Formaldehyd, Glutaraldehyd und/oder Glyoxal;
e) Pfropfungsagenzien, bevorzugt Acrylsäure-Verbindungen, substituierte Acrylate, Vinylgruppen-haltige Verbindungen und/oder Aldehyd-Amid-Kondensate; und
f) Halide, bevorzugt Epoxihalide, aliphatische Dihalide, halogeniertes Polyethylenglycol und/oder Diglycoldichlorid
wobei das mindestens eine Polysaccharid und Protein bevorzugt mit einer Menge von 0,001-1,0 mol, besonders bevorzugt 0,01-0,5 mol, insbesondere 0,05-0,2 mol, vernetztendes Derivatisierungsreagenz pro mol Anhydroglukoseeinheit des mindestens einen Polysaccharids modifiziert wird.

18. Chemisch derivatisierter Polysaccharid-Protein-Blend, herstellbar nach dem Verfahren gemäß einem der Ansprüche 10 bis 17.

19. Mörtelformulierung enthaltend einen chemisch derivatisierten Polysaccharid-Protein-Blend gemäß einem der Ansprüche 1 bis 9 oder 18.

20. Verwendung des chemisch derivatisierten Polysaccharid-Protein-Blends gemäß einem der Ansprüche 1 bis 9 oder 18
- in der Bauchemie, bevorzugt als Zusatz für eine Formulierung in der Bauchemie, besonders bevorzugt als Zusatz für eine hydraulisch erhärtende Formulierung in der Bauchemie, und/oder
- in einer Klebstoffformulierung und/oder Verfugungsformulierung, bevorzugt in einer Mörtelformulierung, besonders bevorzugt in einer Trockenmörtelformulierung und/oder
- als Bindemittel und/oder Klebstoff, bevorzugt zum Kleben, Armieren, Verfugen und/oder Verspachteln von Fliesen, insbesondere zum Kleben, Armieren, Verfugen und/oder Verspachteln von Fliesen für Wärmedämmverbundsysteme.
